# EUROPÄISCHE PATENTANMELDUNG

(11) **EP 4 704 371 A1**
(43) Veröffentlichungstag der Anmeldung: **04.03.2026**
(21) Anmeldenummer: 25189149.5
(22) Anmeldetag: 11.07.2025
(51) Int. Cl.: H04L 9/14, H04L 9/32

(54) **DIGITALES ZERTIFIKAT**

(30) Priorität: 30.08.2024 DE 102024124790
(71) Anmelder: Bundesdruckerei GmbH, 10969 Berlin (DE)
(72) Erfinder: Nguyen, Kim, 10437 Berlin (DE); Byszio-Wegener, Frank, 16348 Wandlitz (DE); Klaußner, Jan, 10249 Berlin (DE); Morgner, Frank, 15537 Grünheide (DE)
(74) Vertreter: Richardt Patentanwälte PartG mbB

(57) **Zusammenfassung**

Offenbart ist ein digitales Zertifikat (100), welches einen ersten öffentlichen kryptographischen Schlüssel (112) und einen zweiten öffentlichen kryptographischen Schlüssel (122) umfasst. Der erste öffentliche kryptographische Schlüssel (112) ist einem ersten kryptographischen Algorithmus zugeordnet und zur Verwendung in demselben konfiguriert. Der zweite öffentliche kryptographische Schlüssel (122) ist einem zweiten kryptographischen Algorithmus zugeordnet und zur Verwendung in demselben konfiguriert. Bei einem der beiden Algorithmen handelt es sich um einen Signaturprüfalgorithmus und der in diesem Signaturprüfalgorithmus zu verwendende öffentliche kryptographische Schlüssel ist als Signaturprüfschlüssel zum Prüfen von einer oder mehreren digitalen Signaturen (322) des Inhabers des Zertifikats (100) konfiguriert. Bei dem anderen der beiden Algorithmen handelt es sich um einen Verschlüsselungs- oder Schlüsselaushandlungsalgorithmus. Der in diesem anderen Algorithmus zu verwendende öffentliche kryptographische Schlüssel ist ein Verschlüsselungsschlüssel zum Verschlüsseln von Daten (422). Der in diesem Schlüsselaushandlungsalgorithmus zu verwendende öffentliche kryptographische Schlüssel ist ein Verschlüsselungsschlüssel zum Aushandeln eines kryptographischen Schlüssels zum Verschlüsseln von Daten (422).

## Beschreibung

### GEBIET DER TECHNIK

Die Erfindung betrifft ein digitales Zertifikat, ein Speichermedium mit dem digitalen Zertifikat, ein Verfahren zum Verwenden des digitalen Zertifikats und ein Computersystem zum Verwenden des digitalen Zertifikats.

### STAND DER TECHNIK

Digitale Zertifikate sind digitale Datensätze, deren Authentizität und Integrität durch kryptografische Verfahren nachprüfbar abgesichert ist. Sie werden meistens von Zertifizierungsstellen, auch Certification Authorities (CA) genannt, ausgestellt und umfassen Daten, unter deren Verwendung ihre Authentizität und Integrität nachgeprüft werden kann.

Heutzutage weit verbreitet sind sogenannte Public-Key-Zertifikate, etwa nach dem Standard X.509, welche einen öffentlichen kryptographischen Schlüssel bereitstellen. Dabei bestätigt ein Public-Key-Zertifikat die Identität des Inhabers des bereitgestellten öffentlichen kryptographischen Schlüssels und gegebenenfalls weitere Eigenschaften des entsprechenden öffentlichen kryptographischen Schlüssels. Ein solcher von einem Public-Key-Zertifikat bereitgestellter öffentlicher kryptographischer Schlüssel ist dazu vorgesehen, von einem Empfänger des entsprechenden Zertifikats zum Durchführen öffentlicher kryptographischer Operationen verwendet zu werden.

Bisherige auf asymmetrischen Schlüsselpaaren basierende Krypto-Algorithmen können sowohl zur Signaturverifikation als auch zur Verschlüsselung von Nachrichten verwendet werden. Ein von einem Public-Key-Zertifikat bereitgestellter öffentlicher kryptographischer Schlüssel kann mithin sowohl zum Validieren von digitalen Signaturen des Inhabers des bereitgestellten öffentlichen kryptographischen Schlüssels verwendet werden, wobei der bereitgestellte öffentliche kryptographische Schlüssel in diesem Fall als Signaturprüfschlüssel verwendet wird, als auch zum Verschlüsseln von Nachrichten an den Inhaber des bereitgestellten öffentlichen kryptographischen Schlüssels, wobei der bereitgestellte öffentliche kryptographische Schlüssel in diesem Fall als Verschlüsselungsschlüssel verwendet wird.

Eine solche übliche doppelte Verwendung zur Signaturverifikation und Verschlüsselung ist beispielsweise im Fall von Post-Quantum Cryptography (PQC) Algorithmen nicht mehr möglich. Daher besteht eine Notwendigkeit für neue Ansätze im Hinblick auf den Aufbau digitaler Zertifikate, welche insbesondere auch mit PQC-Algorithmen verwendet werden können.

### ZUSAMMENFASSUNG

Es ist eine Aufgabe der Erfindung, ein verbessertes digitales Zertifikat bereitzustellen. Die der Erfindung zugrunde liegende Aufgabe wird durch die Merkmale der unabhängigen Ansprüche gelöst. Beispielhafte Merkmalskombinationen werden in den abhängigen Ansprüchen beschrieben.

In einem Aspekt ist ein digitales Zertifikat offenbart. Das Zertifikat umfasst einen ersten öffentlichen kryptographischen Schlüssel eines ersten asymmetrischen Kryptosystems. Dem ersten öffentlichen kryptographischen Schlüssel ist ein erster kryptographischer Algorithmus zugeordnet. Der erste öffentliche kryptographische Schlüssel ist zur Verwendung in dem ersten kryptographischen Algorithmus konfiguriert. Eine kryptographische Sicherheit des ersten asymmetrischen Kryptosystems beruht auf einem ersten Typ von asymmetrischem kryptographischem Problem.

Das Zertifikat umfasst ferner einen zweiten öffentlichen kryptographischen Schlüssel eines zweiten asymmetrischen Kryptosystems. Dem zweiten öffentlichen kryptographischen Schlüssel ist ein zweiter kryptographischer Algorithmus zugeordnet. Der zweite öffentliche kryptographische Schlüssel ist zur Verwendung in dem zweiten kryptographischen Algorithmus konfiguriert. Eine kryptographische Sicherheit des zweiten asymmetrischen Kryptosystems beruht auf einem zweiten Typ von asymmetrischem kryptographischem Problem.

Der erste öffentliche kryptographische Schlüssel unterscheidet sich von dem zweiten öffentlichen kryptographischen Schlüssel. Der erste kryptographische Algorithmus unterscheidet sich von dem zweiten kryptographischen Algorithmus.

Das digitale Zertifikat ordnet den ersten und den zweiten öffentlichen kryptographischen Schlüssel einem Inhaber des Zertifikats zu. Ferner ist das digitale Zertifikat von einem Aussteller signiert.

Bei einem der beiden Algorithmen handelt es sich um einen Signaturprüfalgorithmus. Der in diesem Signaturprüfalgorithmus zu verwendende öffentliche kryptographische Schlüssel ist als Signaturprüfschlüssel zum Prüfen von einer oder mehreren digitalen Signaturen des Inhabers des Zertifikats konfiguriert.

Bei dem anderen der beiden Algorithmen handelt es sich um einen Verschlüsselungs- oder Schlüsselaushandlungsalgorithmus. Der in diesem anderen Algorithmus zu verwendende öffentliche kryptographische Schlüssel ist als Verschlüsselungsschlüssel zum Verschlüsseln von Daten oder zum Aushandeln eines kryptographischen Schlüssels zur verschlüsselten Übertragung von Daten an den Inhaber des Zertifikats konfiguriert.

Ein Kryptosystem bezeichnet ein System von kryptographischen Schlüsseln und Algorithmen, welche zur Ausführung eines kryptographischen Verfahrens, wie etwa einem Verschlüsseln, Entschlüsseln und/oder Signieren, konfiguriert sind. Ein asymmetrisches Kryptosystem ist ein System von kryptographischen Schlüsseln und Algorithmen, welches zur Ausführung eines asymmetrischen kryptographischen Verfahrens konfiguriert ist. Eine kryptographische Sicherheit eines entsprechenden asymmetrischen Kryptosystems beruht auf einem asymmetrischen kryptographischen Problem. Bei einem solchen asymmetrischen kryptographischen Problem handelt es sich um eine mathematische Funktion, die leicht auszuführen, aber schwer umzukehren ist. Ohne eine Kenntnis eines Geheimnisses bzw. einer geheim zuhaltenden Information ist es praktisch unmöglich oder nur mit erheblichem Rechen- und Zeitauswand möglich, die entsprechende Funktion zu invertieren.

Ein solches asymmetrisches kryptographisches Problem ist mithin ein mathematisches Problem bzw. eine mathematische Funktion, welche für einen legitimen Nutzer eine geringere, beispielsweise polynomische Komplexität, aufweist, während es für einen unberechtigten Angreifer eine höhere Komplexität, etwa eine exponentielle Komplexität, aufweist. Diese Asymmetrie ermöglicht ein Bereitstellen eines sicheren, aber für praktische Anwendungen verwendbaren kryptographischen Algorithmus, mit dem kryptographische Funktionen, wie etwa ein Verschlüsseln, Entschlüsseln und/oder Signieren, implementiert werden können.

Beispielsweise handelt es sich bei einem Typ von asymmetrischem kryptographischem Problem bzw. mathematischem Problem, welches einem entsprechenden asymmetrischen Kryptosystem zugrunde liegt, um ein Gitterproblem, beispielsweise eine Variante des Gitterproblems des Lernens mit Fehlern, ein Problem eines Decodierens eines fehlerkorrigierten Codes, eines Short-Integer-Solution-(SIS)Problems, etwa eines Gitterproblems auf Modulgittern oder eines NTRU-Gitterproblems, oder eine Hashfunktion bzw. ein Problem eines Invertierens einer entsprechenden Hashfunktion.

Beispielsweise umfasst das Zertifikat zusätzlich einen dritten öffentlichen kryptographischen Schlüssel eines dritten asymmetrischen Kryptosystems. Dem dritten öffentlichen kryptographischen Schlüssel ist beispielsweise ein dritter kryptographischer Algorithmus zugeordnet. Der dritte öffentliche kryptographische Schlüssel ist beispielsweise zur Verwendung in dem dritten kryptographischen Algorithmus konfiguriert. Eine kryptographische Sicherheit des dritten asymmetrischen Kryptosystems beruht beispielsweise auf einem dritten Typ von asymmetrischem kryptographischem Problem.

Der dritte öffentliche kryptographische Schlüssel unterscheidet sich beispielsweise von dem ersten und dem zweiten öffentlichen kryptographischen Schlüssel. Beispielsweise weisen die drei öffentlichen kryptographischen Schlüssel zudem unterschiedliche Längen auf. Der dritte kryptographische Algorithmus unterscheidet sich beispielsweise von dem ersten und zweiten kryptographischen Algorithmus. Beispielsweise unterscheidet sich der dritte Typ von asymmetrischem kryptographischem Problem zumindest von dem ersten oder dem zweiten Typ von asymmetrischem kryptographischem Problem. Beispielsweise unterscheidet sich der dritte Typ von asymmetrischem kryptographischem Problem von dem ersten und dem zweiten Typ von asymmetrischem kryptographischem Problem.

Das digitale Zertifikat ordnet den dritten öffentlichen kryptographischen Schlüssel beispielsweise dem Inhaber des Zertifikats zu. Im Falle von drei kryptographischen Algorithmen handelt es sich bei den entsprechenden Algorithmen beispielsweise um einen Signaturprüfalgorithmus, einen Verschlüsselungsalgorithmus und einen Schlüsselaushandlungsalgorithmus. Der in dem Signaturprüfalgorithmus zu verwendende öffentliche kryptographische Schlüssel ist als Signaturprüfschlüssel zum Prüfen von einer oder mehreren digitalen Signaturen des Inhabers des Zertifikats konfiguriert. Der in dem Verschlüsselungsalgorithmus zu verwendende öffentliche kryptographische Schlüssel ist als Verschlüsselungsschlüssel zum Verschlüsseln von Daten zur verschlüsselten Übertragung der Daten an den Inhaber des Zertifikats konfiguriert. Der in dem Schlüsselaushandlungsalgorithmus zu verwendende öffentliche kryptographische Schlüssel ist zum Aushandeln eines kryptographischen Schlüssels zur verschlüsselten Übertragung der Daten an den Inhaber des Zertifikats konfiguriert.

In diesem Fall werden mit ein und demselben Zertifikat beispielsweise drei unterschiedliche öffentliche kryptographische Schlüssel für drei unterschiedliche Verwendungszwecke bereitgestellt, nämlich in einem Signaturprüfalgorithmus, einem Verschlüsselungsalgorithmus und einem Schlüsselaushandlungsalgorithmus. Bei den drei kryptographischen Algorithmen handelt es sich beispielsweise jeweils um einen PQC-Algorithmus.

Beispielsweise unterscheidet sich der erste Typ von einem asymmetrischen kryptographischen Problem, von dem zweiten Typ von einem asymmetrischen kryptographischen Problem. Unterschiedliche Typen von asymmetrischen kryptographischen Problemen, auf welchen die kryptographische Sicherheit der jeweiligen asymmetrischen Kryptosysteme beruhen, bezeichnen den Umstand, dass die kryptographischen Schlüssel der entsprechenden Kryptosysteme Lösungssysteme für unterschiedliche Arten von mathematischen Problemen darstellen. Aus einer Schwierigkeit bzw. dem Umfang des statistisch erforderlichen Rechenaufwands zur Bestimmung der entsprechenden Lösungssysteme, ergibt sich die kryptographische Sicherheit der jeweiligen Kryptosysteme sowie der zugeordneten kryptographischen Algorithmen.

Beispielsweise umfasst das Zertifikat ferner einen ersten Identifikator des ersten kryptographischen Algorithmus und einen zweiten Identifikator des zweiten kryptographischen Algorithmus.

Beispielsweise weisen die beiden öffentlichen kryptographischen Schlüssel zudem unterschiedliche Längen auf. Der erste kryptographische Algorithmus unterscheidet sich von dem zweiten kryptographischen Algorithmus. Beispielsweise beruhen die Algorithmen auf unterschiedlichen kryptographischen bzw. mathematischen Konzepten. Beispielsweise liegen den Schlüsseln unterschiedliche Arten mathematischer Probleme zugrunde, aus denen sich die kryptographische Sicherheit des jeweiligen Algorithmus ergibt.

Beispiele können den Vorteil haben, dass ein Zertifikat bereitgestellt wird, welches sowohl zu einer Verwendung für Signaturprüfzwecke als auch zu einer Verwendung für Verschlüsselungszwecke geeignet ist, zugleich aber für beide Zwecke unterschiedliche öffentliche kryptographische Schlüssel verwendet werden. Es werden somit durch ein Zertifikat in kryptographisch gesicherter Weise zwei verschiedene öffentliche kryptographische Schlüssel bereitgestellt.

So kann für den Signaturprüfschlüssel als Schlüsselverwendung (englisch: "key usage") in dem Zertifikat beispielsweise eine Verwendung für eine digitale Signatur (englisch: "digital signature"), d.h. zur Prüfung digitaler Signaturen angegeben sein. Ferner kann für den Verschlüsselungsschlüssel als Schlüsselverwendung (englisch: "key usage") in dem Zertifikat beispielsweise eine Verwendung für eine Verschlüsselung, beispielsweise für eine Schlüsselverschlüsselung (englisch: "key encipherment") und/oder eine Datenverschlüsselung (englisch: "data encipherment") angegeben sein.

Im Folgenden wird der Einfachheit halber unter einer Datenverschlüsselung, sofern nicht explizit anderweitig definiert, eine Verschlüsselung von Daten im allgemeinsten Sinne verstanden, d.h., insbesondere von Daten in Form eines oder mehrerer kryptographischer Schlüssel, von Daten zum Herleiten eines oder mehrerer kryptographischer Schlüssel, wie auch von Daten, die unabhängig von kryptographischen Schlüsseln sind.

Beispielsweise kann ein symmetrischer kryptographischer Schlüssel oder können Daten zum Herleiten eines symmetrischen kryptographischen Schlüssels, im Fall einer Datenverschlüsselung, verschlüsselt und an den Inhaber des Zertifikats gesendet werden, sodass der Inhaber des Zertifikats in kryptographisch gesicherter Form Zugriff auf den entsprechenden symmetrischen kryptographischen Schlüssel erhält. Damit kann eine verschlüsselte Kommunikation unter Verwendung des entsprechenden symmetrischen Schlüssels mit dem Inhaber des Zertifikats ermöglicht werden.

Beispielsweise können Daten im Fall einer Datenverschlüsselung verschlüsselt und an den Inhaber des Zertifikats gesendet werden, sodass der Inhaber des Zertifikats in kryptographisch gesicherter Form Zugriff auf die entsprechenden Daten erhält.

Beispielsweise kann im Falle einer Schlüsselaushandlung ein kryptographischer Schlüssel ausgehandelt werden, mit dem dann Daten verschlüsselt und an den Inhaber des Zertifikats gesendet werden können, sodass der Inhaber des Zertifikats in kryptographisch gesicherter Form Zugriff auf die entsprechenden Daten erhält.

Das Zertifikat kann die Verwendungszwecke des als Verschlüsselungsschlüssel konfigurierten öffentlichen kryptographischen Schlüssels auch explizit begrenzen und eine explizite Schlüsselverschlüsselung (englisch: "key encipherment") definieren, die sich ausschließlich auf Daten in Form von kryptographischen Schlüsseln und/oder Daten in Form von Daten zum Herleiten kryptographischer Schlüssel beschränkt. Alternativerweise kann das Zertifikat die Verwendungszwecke des als Verschlüsselungsschlüssel konfigurierten öffentlichen kryptographischen Schlüssels auch explizit begrenzen und eine ausschließliche Verwendung zur expliziten Datenverschlüsselung (englisch: "data encipherment") definieren, die sich auf Daten beschränkt, die unabhängig von kryptographischen Schlüsseln und deren Herleitung sind.

So kann ein entsprechendes Zertifikat beispielsweise dazu verwendet werden, sowohl eine Signatur einer empfangenen Nachricht, etwa in Form einer ersten E-Mail, zu prüfen als auch zugleich eine Antwort auf die empfangene Nachricht, etwa in Form einer zweiten E-Mail, zu verschlüsseln und so kryptographisch gesichert auf die Nachricht zu antworten. Dabei kann einerseits anhand der Signatur sichergestellt werden, dass die empfangene Nachricht tatsächlich von dem Inhaber des Zertifikats stammt und zudem nicht verändert wurde. Andererseits kann mittels der Verschlüsselung sichergestellt werden, dass ausschließlich der Inhaber des Zertifikats dazu in der Lage ist, die Antwort auf die empfangene Nachricht zu lesen. Ein solches Vorgehen kann insbesondere zum Zwecke einer kryptographischen Absicherung eines ersten Kontakts mittels der empfangenen Nachricht von Vorteil sein.

Beispiele können den Vorteil haben, dass es sich bei den beiden Algorithmen, d.h. dem Signaturprüfalgorithmus und dem Verschlüsselungs- oder Schlüsselaushandlungsalgorithmus, um unterschiedliche Algorithmen handeln. Dies erlaubt es beispielsweise für die beiden Algorithmen PQC-Algorithmen zu verwenden. Da sich PQC-Algorithmen für Signaturprüfzwecke im Allgemeinen von PQC-Algorithmen für Verschlüsselungszwecke grundlegend unterscheiden, können durch die Verwendung zweier unterschiedlicher Algorithmen und zugehöriger unterschiedlicher Schlüssel sowohl ein quantencomputersicherer Algorithmus für die Signaturprüfung als auch ein quantencomputersicherer Algorithmus für die Verschlüsselung mittels ein und desselben Zertifikats attestiert bzw. zertifiziert werden. Insbesondere können die entsprechenden zugehörigen öffentlichen kryptographischen Schlüssel mittels ein und desselben Zertifikats attestiert bzw. zertifiziert werden.

Durch die Verwendung ein und desselben Zertifikats werden zudem die beiden Algorithmen einander zugeordnet, d.h. es kann sichergestellt werden, dass die beiden entsprechenden Algorithmen, insbesondere die beiden entsprechenden PQC-Algorithmen, für Signaturprüfzwecke und Verschlüsselungs- bzw. Schlüsselaushandlungszwecke in Kombination miteinander verwendet werden. So kann etwa verhindert werden, dass ein abweichender Signaturprüfalgorithmus oder ein abweichender Verschlüsselungs- bzw. Schlüsselaushandlungsalgorithmus verwendet wird, welcher etwa ein niedrigeres Sicherheitsniveau, insbesondere ein nicht quantencomputersicheres Niveau, aufweist. Insbesondere kann somit verhindert werden, dass für eine Verschlüsselung einer Antwort auf eine erhaltene Nachricht absichtlich oder aus Versehen ein Verschlüsselungs- oder Schlüsselaushandlungsalgorithmus mit einem für die konkreten Zwecke unzureichenden Sicherheitsniveau gewählt wird. Vielmehr kann beispielsweise sichergestellt werden, dass beide Algorithmen dasselbe Sicherheitsniveau, insbesondere ein quantencomputersicheres Niveau, aufweisen.

Zudem kann sichergestellt werden, dass für die Zertifizierung beider Algorithmen dasselbe Sicherheitsniveau eingehalten wird.

Beispielsweise ermöglicht ein entsprechendes Zertifikat eine kombinierte Signaturprüfung und Datenverschlüsselung. Dadurch, dass für Signaturprüfzwecke und Verschlüsselungszwecke ein und dasselbe Zertifikat zu prüfen ist, kann beispielsweise der Aufwand für die Zertifikatsprüfung reduziert und damit die Effizienz für die kombinierte Signaturprüfung und Datenverschlüsselung erhöht werden. Zudem muss nur ein Zertifikat bereitgestellt bzw. übermittelt werden, um sowohl Signaturprüfung als auch Datenverschlüsselung durchführen zu können. Dabei können insbesondere Probleme ausgeschlossen werden, die daraus resultieren, dass ein für die kombinierte Signaturprüfung und Datenverschlüsselung benötigtes zweites Zertifikat fehlt, obwohl ein benötigtes erstes Zertifikat bereits erfolgreich bereitgestellt wurde. Vielmehr kann bereits ein Bereitstellen eines Zertifikats ausreichen, um sowohl die Signaturprüfung als auch die Datenverschlüsselung ausführen zu können.

Beispielsweise ist die Signatur des Ausstellers des Zertifikats durch eine Public-Key-Infrastruktur (PKI) bzw. eine auf einer PKI basierende Zertifikatskette abgesichert.

Im Falle einer Verwendung einer PKI bzw. einer auf einer PKI basierenden Zertifikatskette zur Absicherung des entsprechenden Zertifikats, muss bei einem Bereitstellen eines einzigen Zertifikats für die kombinierte Signaturprüfung und Datenverschlüsselung zum Validieren des entsprechenden Zertifikates beispielsweise nur die eine diesem Zertifikat zur Absicherung zugeordnete Zertifikatskette geprüft werden. Im Falle von mehr als einem Zertifikat müssten beispielsweise mehr als eine Zertifikatskette geprüft werden.

Beispielsweise kann das Zertifikat für eine Verwendung im Zuge des S/MIME (englisch: "Secure / Multipurpose Internet Mail Extensions") Standards konfiguriert sein. Bei dem S/MIME-Standard handelt es sich um einen Standard für das Signieren und Verschlüsseln von MIME-Objekten unter Verwendung von asymmetrischen Kryptosystemen. S/MIME wird beispielsweise in Protokollen zur Absicherung in der Anwendungsschicht (englisch: "Application Layer"), d.h., der obersten Schicht in dem OSI-Referenzmodell (englisch: "Open Systems Interconnection model"), eingesetzt. Typische Einsatzbereiche von S/MIME sind beispielsweise E-Mails und AS2. AS2 (englisch: "Applicability Statement 2") bezeichnet einen Standard für einen gesicherten Nachrichtentransport über das Internet. In der Praxis kann S/MIME auf der Inhaltsebene beispielsweise mit TLS auf der Transportebene kombiniert werden.

Beispielsweise kann das Zertifikat für eine Verwendung im Zuge des TLS-Standards konfiguriert sein. TLS (englisch: "Transport Layer Security"), welche auch unter der Vorgängerbezeichnung SSL (englisch: "Secure Sockets Layer") bekannt ist, bezeichnet ein Verschlüsselungsprotokoll zur sicheren Datenübertragung im Internet. Das TLS-Protokoll umfasst beispielsweise die beiden Hauptkomponenten TLS-Handshake und TLS-Record. In dem TLS-Handshake finden ein sicherer Schlüsselaustausch und eine Authentifizierung statt. TLS-Record verwendet anschließend den im TLS-Handshake ausgehandelten symmetrischen Schlüssel für eine sichere Datenübertragung. Die Daten werden mit dem symmetrischen Schlüssel verschlüsselt und beispielsweise mit einem MAC gegen Veränderungen geschützt übertragen.

Ein MAC (englisch: "Message Authentication Code") dient dazu, Gewissheit über den Ursprung von Daten, beispielsweise von Nachrichten, zu erhalten und ihre Integrität nachzuweisen. MAC-Algorithmen erfordern im Allgemeinen zwei Eingabeparameter, erstens die zu schützenden Daten und zweitens einen geheimen Schlüssel, aus welchen eine als MAC bezeichnete Prüfsumme berechnet wird.

Beispielsweise kann das Zertifikat für eine Verwendung im Zuge des IKE-Standards konfiguriert sein. IKE (englisch: "Internet Key Exchange") bezeichnet ein Protokoll in der IPsec-Protokoll-Suite. IKE ist ein Schlüsselverwaltungsprotokoll, das zum Einrichten eines sicheren, authentifizierten Kommunikationskanals zwischen zwei Geräten verwendet wird. IPsec (englisch: "Internet Protocol Security") ist eine Protokoll-Suite, die eine gesicherte Kommunikation über potentiell unsichere IP-Netze, wie etwa das Internet, ermöglicht.

IPsec arbeitet auf der Vermittlungsschicht (englisch: "Internet Layer") des DoD-Modells, welche der Schicht 3 des OSI-Referenzmodells entspricht, und ist eine Weiterentwicklung der IP-Protokolle. Das Ziel ist es, eine verschlüsselungsbasierte Sicherheit auf Netzwerkebene bereitzustellen. IPsec bietet durch die verbindungslose Integrität sowie die Zugangskontrolle und Authentifikation der Daten diese Möglichkeit an. Zudem wird durch IPsec die Vertraulichkeit sowie Authentizität der Paketreihenfolge durch Verschlüsselung gewährleistet.

Wesentliche Teile von IPsec umfassen beispielsweise die Protokolle AH (englisch: "Authentication Header") zum Sicherstellen von Authentizität und Integrität übertragener Pakete sowie zum Authentifizieren des Senders, ESP (englisch: "Encapsulated Security Payload") zum Sicherstellen der Authentizität, Integrität und Vertraulichkeit übertragener Pakete, sowie IKE (englisch: "Internet Key Exchange") zum sicheren Austausch von Schlüsseln.

Beispiele schaffen eine einfache Möglichkeit in neuen Zertifikaten, insbesondere in neuen PQC-Zertifikaten, neben dem Signaturprüfschlüssel zusätzlich auch den Verschlüsselungsschlüssel zu speichern.

Beispielsweise handelt es sich bei dem Zertifikat um ein Public-Key-Zertifikat. Beispielsweise umfasst das Zertifikat neben den beiden öffentlichen kryptographischen Schlüsseln und den beiden Identifikatoren der beiden kryptographischen Algorithmen: Angaben zum Aussteller des Zertifikats, wie etwa einen Identifikator des Ausstellers, beispielsweise einen Namen des Ausstellers; Angaben zu Regeln und/oder Verfahren, unter denen das Zertifikat ausgestellt wurde; Angaben zu einer Gültigkeitsdauer des Zertifikats; Angaben zum Inhaber des Zertifikats, bei dem es sich um den Inhaber der beiden öffentlichen kryptographischen Schlüssel handelt, wie etwa einen Identifikator des Inhabers, beispielsweise einen Namen des Inhabers; Angaben zu einem zulässigen Anwendungs- und Geltungsbereich der öffentlichen kryptographischen Schlüssel; und/oder eine Signatur des Ausstellers über die vorgenannten Angaben des Zertifikats einschließlich der beiden öffentlichen kryptographischen Schlüssel und der beiden Identifikatoren der beiden kryptographischen Algorithmen.

Beispielsweise umfasst das Zertifikat eine Zertifikatserweiterung. Bei Zertifikatserweiterungen handelt es sich um ein oder mehrere Informationsfelder, welche zusätzliche Informationen zu einem Zertifikat bereitstellen. Eine Zertifikatserweiterung bietet beispielsweise eine Möglichkeit zur Erweiterung der ursprünglichen X.509-Standards für Zertifikatsinformationen.

Beispielsweise handelt es sich bei dem ersten öffentlichen kryptographischen Schlüssel und dem ersten Identifikator um Bestandteile eines Hauptteils des Zertifikats. Beispielsweise umfasst das digitale Zertifikat den zweiten öffentlichen kryptographischen Schlüssel und den zweiten Identifikator als Teil einer Zertifikatserweiterung.

Beispielsweise umfasst das Zertifikat im Falle eines zusätzlichen dritten öffentlichen kryptographischen Schlüssels den entsprechenden zusätzlichen dritten öffentlichen kryptographischen Schlüssel und einen dritten Identifikator des dritten kryptographischen Algorithmus als Teil der Zertifikatserweiterung.

Beispiele ermöglichen ein einfaches Integrieren zusätzlicher öffentlicher kryptographischer Schlüssel, wie des zweiten öffentlichen kryptographischen Schlüssels, in das Zertifikat in Form einer Zertifikatserweiterung. Dabei umfasst das Zertifikat im Hauptteil bereits den ersten öffentlichen kryptographischen Schlüssel. Eine Verwendung einer Zertifikatserweiterung zu diesem Zweck kann dabei den Vorteil haben, dass das entsprechende Zertifikat trotz des Ergänzens des zweiten öffentlichen kryptographischen Schlüssels weiterhin kompatibel mit bestehenden Protokollen zur Verwendung von Zertifikaten bleibt.

Beispielsweise handelt es sich bei dem Zertifikat um ein X.509-Zertifikat. Beispielsweise handelt es sich bei der Zertifikatserweiterung um eine proprietäre Zertifikatserweiterung nach RFC 5280 Abs 4.2. So kann beispielsweise ein X.509-Zertifikat neben den üblichen Feldern zusätzlich eine proprietäre Zertifikatserweiterung, etwa nach RFC 5280 Abs 4.2, enthalten.

Beispielsweise wird eine solche proprietäre Zertifikatserweiterung bzw. ein Feld einer solchen proprietären Zertifikatserweiterung genutzt, um den zweiten öffentlichen kryptographischen Schlüssel, etwa einen Signaturprüfschlüssel oder einen Verschlüsselungsschlüssel, zu speichern. In der proprietären Zertifikatserweiterung werden beispielsweise der zweite öffentliche kryptographische Schlüssel und der zweite Identifikator des zweiten kryptographischen Algorithmus gespeichert.

Beispielsweise werden der zweite öffentliche kryptographische Schlüssel und der zweite Identifikator in Form eines von dem digitalen Zertifikat umfassten Unterzertifikats in der proprietären Zertifikatserweiterung gespeichert. Bei diesem Unterzertifikat kann es sich beispielsweise um ein an sich eigenständiges digitales Zertifikat für den zweiten öffentlichen kryptographischen Schlüssel handeln. Durch die Aufnahme und kryptographische Einbindung als proprietäre Zertifikatserweiterung in das digitale Zertifikat mit dem ersten öffentlichen Schlüssel, wird das Unterzertifikat mit dem zweiten öffentlichen kryptographischen Schlüssel an das digitale Zertifikat mit dem ersten öffentlichen Schlüssel gekoppelt. Diese kryptographische Einbindung bzw. Kopplung ist über die Signatur des digitalen Zertifikats mit dem ersten öffentlichen Schlüssel kryptographisch abgesichert.

Im Falle eines dritten öffentlichen kryptographischen Schlüssels werden dieser dritte öffentliche kryptographische Schlüssel und der dritte Identifikator beispielsweise in Form eines von dem digitalen Zertifikat umfassten zweiten Unterzertifikats in der proprietären Zertifikatserweiterung gespeichert. Das zweite Unterzertifikat des dritten öffentlichen kryptographischen Schlüssels kann dabei beispielsweise analog zu dem Unterzertifikat des zweiten öffentlichen kryptographischen Schlüssels aufgebaut sein.

Beispielsweise umfasst der Hauptteil des Zertifikats eine Angabe einer für den ersten öffentlichen kryptographischen Schlüssel passenden Schlüsselverwendung (englisch: "key usage"), wie beispielsweise eine digitale Signatur (englisch: "digital signature"). Beispielsweise definiert die Angabe als Schlüsselverwendung (englisch: "key usage") eine Schlüsselverschlüsselung (englisch: "key encipherment") und/oder eine Datenverschlüsselung (englisch: "data encipherment").

Beispielsweise umfasst die proprietäre Zertifikatserweiterung des Zertifikats eine Angabe einer für den zweiten öffentlichen kryptographischen Schlüssel passenden und zu der Schlüsselverwendung (englisch: "key usage") des ersten öffentlichen kryptographischen Schlüssel komplementäre Schlüsselverwendung, wie beispielsweise eine Schlüsselverschlüsselung (englisch: "key encipherment") und/oder eine Datenverschlüsselung (englisch: "data encipherment"). Beispielsweise definiert die Angabe als Schlüsselverwendung (englisch: "key usage") eine digitale Signatur (englisch: "digital signature").

Beispielsweise umfasst der Hauptteil des Zertifikats neben dem ersten Identifikator des ersten kryptographischen Algorithmus, d.h. Angaben zum Public-Key-Algorithmus des ersten öffentlichen kryptographischen Schlüssels, und dem ersten kryptographischen Schlüssel, d.h., dem ersten Public Key des Zertifikatsinhabers, ein oder mehrere der folgenden Angaben des Zertifikats: Version, Seriennummer, Algorithmen-ID, Aussteller, Gültigkeit, beispielsweise von ... bis ..., Zertifikatsinhaber, Zertifikatsinhaber-Schlüsselinformationen, eindeutige ID des Ausstellers, eindeutige ID des Zertifikatsinhabers, Zertifikat-Signaturalgorithmus und Zertifikat-Signatur. Zudem umfasst das Zertifikat beispielsweise eine Zertifikatserweiterung.

Das Zertifikat umfasst beispielsweise eine Signatur eines Zertifikatsausstellers. Bei dieser Signatur handelt es sich beispielsweise um eine PQC-Signatur.

Die Zertifikatserweiterung umfasst beispielsweise den zweiten Identifikator des zweiten kryptographischen Algorithmus, d.h. Angaben zum Public-Key-Algorithmus des zweiten öffentlichen kryptographischen Schlüssels, und den zweiten kryptographischen Schlüssel, d.h., den zweiten Public Key des Zertifikatsinhabers. Beispielsweise ist die Signatur des Zertifikats durch eine Public-Key-Infrastruktur (PKI) bzw. eine auf einer PKI basierende Zertifikatskette abgesichert.

Falls die Zertifikatserweiterung den zweiten öffentlichen kryptographischen Schlüssel und den zweiten Identifikator in Form eines von dem digitalen Zertifikat umfassten Unterzertifikats umfasst, umfasst die Zertifikatserweiterung bzw. das entsprechende Unterzertifikat zusätzlich beispielsweise ein oder mehrere der folgenden Angaben des Unterzertifikats: Version, Seriennummer, Algorithmen-ID, Aussteller, Gültigkeit, beispielsweise von ... bis ..., Unterzertifikatsinhaber, Unterzertifikatsinhaber-Schlüsselinformationen, eindeutige ID des Ausstellers, eindeutige ID des Unterzertifikatsinhabers, Unterzertifikat-Signaturalgorithmus und Unterzertifikat-Signatur.

Das Unterzertifikat umfasst beispielsweise eine Signatur eines Ausstellers des Unterzertifikats. Bei dieser Signatur handelt es sich beispielsweise um eine PQC-Signatur. Beispielsweise handelt es sich bei dem Aussteller des Unterzertifikats um denselben Aussteller, der auch das Zertifikat ausstellt. Beispielsweise handelt es sich bei dem Aussteller des Unterzertifikats um einen von dem Aussteller des Hauptzertifikats verschiedenen Aussteller. Beispielsweise ist die Signatur des Unterzertifikats durch eine Public-Key-Infrastruktur (PKI) bzw. eine auf einer PKI basierende Zertifikatskette abgesichert.

Beispielsweise umfasst die Zertifikatserweiterung eine Signatur des zweiten öffentlichen kryptographischen Schlüssels und des zweiten Identifikators. Beispiele haben den Vorteil, dass der zweite öffentliche kryptographische Schlüssel und der zweite Identifikator zusätzlich zu der Signatur des gesamten Zertifikats durch den Aussteller des Zertifikats mittels einer weiteren zertifikatserweiterungsspezifischen Signatur kryptographisch abgesichert sein können. Beispielsweise handelt es sich bei der Signatur des zweiten öffentlichen kryptographischen Schlüssels und des zweiten Identifikators ebenfalls um eine Signatur des Ausstellers des Zertifikats. Beispielsweise handelt es sich bei der Signatur des zweiten öffentlichen kryptographischen Schlüssels und des zweiten Identifikators ebenfalls um eine Signatur eines Ausstellers der Zertifikatserweiterung, welcher von dem Aussteller des Zertifikats verschieden sein kann. Beispielsweise ist die Signatur des zweiten öffentlichen kryptographischen Schlüssels und des zweiten Identifikators durch eine Public-Key-Infrastruktur (PKI) bzw. eine auf einer PKI basierende Zertifikatskette abgesichert. Beispielsweise handelt es sich bei der Signatur des zweiten öffentlichen kryptographischen Schlüssels und des zweiten Identifikators um eine PQC-Signatur.

Im Falle eines dritten öffentlichen kryptographischen Schlüssels umfasst die Zertifikatserweiterung beispielsweise eine Signatur des dritten öffentlichen kryptographischen Schlüssels und des dritten Identifikators.

Beispielsweise umfasst die Zertifikatserweiterung den zweiten öffentlichen kryptographischen Schlüssel und den zweiten Identifikator in Form eines von dem digitalen Zertifikat umfassten Unterzertifikats. Das Unterzertifikat umfasst den zweiten öffentlichen kryptographischen Schlüssel und den zweiten Identifikator. Bei der Signatur des zweiten öffentlichen kryptographischen Schlüssels und des zweiten Identifikators handelt es sich um eine Signatur des Unterzertifikats durch einen Aussteller des Unterzertifikats.

Beispiele können den Vorteil haben, dass der zweite öffentliche kryptographische Schlüssel in Form eines Unterzertifikats in das Zertifikat integriert wird. Dieses Unterzertifikat wird als Zertifikatserweiterung in das Zertifikat integriert, sodass das Zertifikat sowohl ein Zertifikat des ersten öffentlichen kryptographischen Schlüssels in Form des Hauptteils des Zertifikats als auch ein Zertifikat des zweiten öffentlichen kryptographischen Schlüssels in Form der Zertifikatserweiterung umfasst.

Beispielsweise handelt es sich bei dem Unterzertifikat um ein Public-Key-Zertifikat. Beispielsweise umfasst das Unterzertifikat neben dem zweiten öffentlichen kryptographischen Schlüssel und dem zweiten Identifikator: Angaben zum Aussteller des Unterzertifikats, wie etwa einen Identifikator des Ausstellers, beispielsweise einen Namen des Ausstellers; Angaben zu Regeln und/oder Verfahren, unter denen das Unterzertifikat ausgestellt wurde; Angaben zu einer Gültigkeitsdauer des Unterzertifikats; Angaben zum Inhaber des Unterzertifikats, bei dem es sich um den Inhaber des zweiten öffentlichen kryptographischen Schlüssels handelt, wie etwa einen Identifikator des Inhabers, beispielsweise einen Namen des Inhabers; Angaben zu einem zulässigen Anwendungs- und Geltungsbereich des zweiten öffentlichen kryptographischen Schlüssels; und/oder eine Signatur des Ausstellers über die vorgenannten Angaben des Unterzertifikats einschließlich des zweiten öffentlichen kryptographischen Schlüssels und des zweiten Identifikators.

Bei dem Inhaber des Unterzertifikats handelt es sich beispielsweise um den Inhaber des Zertifikats.

Beispielsweise ist der Aussteller des Zertifikats verschieden von dem Aussteller des Unterzertifikats. In diesem Fall handelt es sich bei dem Aussteller des Unterzertifikats um einen von dem Aussteller des Zertifikats verschiedenen Ausstellers.

Der Aussteller des Zertifikats empfängt das Unterzertifikat, beispielsweise von einem Aussteller des Unterzertifikats, und integriert es, beispielsweise auf eine erfolgreiche Validierung des Unterzertifikats hin, im Zuge des Ausstellens des Zertifikats als Zertifikatserweiterung in das entsprechende Zertifikat.

Beispielsweise ist die Signatur des Unterzertifikats durch einen Aussteller des Unterzertifikats durch eine Public-Key-Infrastruktur (PKI) bzw. eine auf einer PKI basierende Zertifikatskette abgesichert. Ist der Aussteller des Unterzertifikats verschieden von dem Aussteller des Zertifikats, so werden das Zertifikat und das Unterzertifikat beispielsweise von verschiedenen Zertifikatsketten abgesichert. Beispielsweise sind das Zertifikat und das Unterzertifikat durch zwei verschiedene PKl-Zertifikatsketten abgesichert.

Beispielsweise ist der Aussteller des Zertifikats identisch mit dem Aussteller des Unterzertifikats. In diesem Fall handelt es sich bei dem Aussteller des Unterzertifikats um den Aussteller des Zertifikats. Beispielsweise stellt der Aussteller des Zertifikats auch das Unterzertifikat aus. Beispielsweise stellt der Aussteller des Zertifikats zunächst das Unterzertifikat aus und stellt dann das Zertifikat aus, in das der Aussteller das ausgestellte Unterzertifikat in Form der Zertifikatserweiterung integriert.

Beispielsweise ist die Signatur des Unterzertifikats durch einen Aussteller des Unterzertifikats durch eine Public-Key-Infrastruktur (PKI) bzw. eine auf einer PKI basierende Zertifikatskette abgesichert. Handelt es sich bei dem Aussteller des Unterzertifikats um den Aussteller des Zertifikats, so werden das Zertifikat und das Unterzertifikat beispielsweise von ein und derselben Zertifikatskette abgesichert.

Beispielsweise umfasst das Zertifikat ferner eine zusätzliche Angabe eines ersten Verwendungszwecks des ersten öffentlichen kryptographischen Schlüssels. Dieser erste Verwendungszweck legt fest, zu welcher Verwendung der erste öffentliche kryptographische Schlüssel gemäß Zertifikat freigegeben bzw. zertifiziert ist. Bei dem ersten Verwendungszweck handelt es sich beispielsweise um eine Verwendung als Signaturprüfschlüssel zum Prüfen von Signaturen des Inhabers des Zertifikats. Bei dem ersten Verwendungszweck handelt es sich beispielsweise um eine Verwendung als Verschlüsselungsschlüssel zum Verschlüsseln von Daten zur verschlüsselten Übertragung der Daten an den Inhaber des Zertifikats. Bei dem ersten Verwendungszweck handelt es sich beispielsweise um eine Verwendung als Verschlüsselungsschlüssel zum Aushandeln eines kryptographischen Schlüssels zur verschlüsselten Übertragung von Daten an den Inhaber des Zertifikats.

Beispielsweise umfasst das Zertifikat ferner eine zusätzliche Angabe eines zweiten Verwendungszwecks des zweiten öffentlichen kryptographischen Schlüssels. Dieser zweite Verwendungszweck legt fest, zu welcher Verwendung der zweite öffentliche kryptographische Schlüssel gemäß Zertifikat freigegeben bzw. zertifiziert ist. Bei dem zweiten Verwendungszweck handelt es sich beispielsweise um eine Verwendung als Verschlüsselungsschlüssel zum Verschlüsseln von Daten zur verschlüsselten Übertragung der Daten an den Inhaber des Zertifikats. Bei dem zweiten Verwendungszweck handelt es sich beispielsweise um eine Verwendung als Verschlüsselungsschlüssel zum Aushandeln eines kryptographischen Schlüssels zur verschlüsselten Übertragung von Daten an den Inhaber des Zertifikats. Bei dem zweiten Verwendungszweck handelt es sich beispielsweise um eine Verwendung als Signaturprüfschlüssel zum Prüfen von Signaturen des Inhabers des Zertifikats.

Beispielsweise ist einer der beiden Verwendungszwecke eine Signaturerstellung. Beispielsweise ist der andere der beiden Verwendungszwecke eine Verschlüsselung. Handelt es sich bei dem ersten Verwendungszweck des ersten öffentlichen kryptographischen Schlüssels um eine Signaturerstellung, so handelt es sich bei dem zweiten Verwendungszweck des zweiten öffentlichen kryptographischen Schlüssels um eine Verschlüsselung. Handelt es sich bei dem ersten Verwendungszweck des ersten öffentlichen kryptographischen Schlüssels um eine Verschlüsselung, so handelt es sich bei dem zweiten Verwendungszweck des zweiten öffentlichen kryptographischen Schlüssels um eine Signaturerstellung.

Beispiele können den Vorteil haben, dass in ein und demselben Zertifikat zwei verschiedene öffentliche kryptographische Schlüssel zur Verwendung in zwei verschiedenen kryptographischen Algorithmen bereitgestellt werden können. Dabei werden die beiden verschiedenen öffentlichen kryptographischen Schlüssel für zwei verschiedene Verwendungszwecke bereitgestellt, nämlich zur Signaturerstellung und zur Verschlüsselung. Insbesondere können zwei PQC-Schlüssel zweier kryptographischer PQC-Algorithmen bereitgestellt werden. Dies ermöglicht es, selbst bei einer Verwendung von PQC-Algorithmen, deren Anwendbarkeit im Gegensatz zu klassischen asymmetrischen kryptographischen Algorithmen beispielsweise beschränkt ist, ein und dasselbe Zertifikat für unterschiedliche Verwendungszwecke, nämlich zur Signaturerstellung und zur Verschlüsselung, mit PQC-Schlüsseln und -Algorithmen verwenden zu können.

Im Falle eines dritten öffentlichen kryptographischen Schlüssels umfasst das Zertifikat beispielsweise ferner eine zusätzliche Angabe eines dritten Verwendungszwecks des dritten öffentlichen kryptographischen Schlüssels. Dieser dritte Verwendungszweck legt fest, zu welcher Verwendung der dritte öffentliche kryptographische Schlüssel gemäß Zertifikat freigegeben bzw. zertifiziert ist. Bei dem dritten Verwendungszweck handelt es sich beispielsweise um eine Verwendung als Signaturprüfschlüssel zum Prüfen von Signaturen des Inhabers des Zertifikats. Bei dem dritten Verwendungszweck handelt es sich beispielsweise um eine Verwendung als Verschlüsselungsschlüssel zum Verschlüsseln von Daten zur verschlüsselten Übertragung der Daten an den Inhaber des Zertifikats. Bei dem dritten Verwendungszweck handelt es sich beispielsweise um eine Verwendung als Verschlüsselungsschlüssel zum Aushandeln eines kryptographischen Schlüssels zur verschlüsselten Übertragung von Daten an den Inhaber des Zertifikats.

Beispielsweise umfasst das Zertifikat den ersten und den zweiten öffentlichen kryptographischen Schlüssel in konkatenierter Form als Kombination. Das Zertifikat umfasst ferner einen dritten Identifikator eines dritten Algorithmus, welcher definiert, wie die Kombination mit den konkatenierten ersten und zweiten öffentlichen kryptographischen Schlüsseln für eine Verwendung aufzuteilen ist. Das Zertifikat ordnet den ersten und zweiten Identifikator dem dritten Algorithmus als Parameter zu.

Beispiele können den Vorteil haben, dass das Zertifikat anstelle lediglich eines öffentlichen kryptographischen Schlüssels zwei öffentliche kryptographische Schlüssel in konkatenierter Form umfasst. Wie die Kombination zu verwenden ist wird durch den dritten Algorithmus definiert. Dieser dritte Algorithmus definiert, wie die Kombination mit den konkatenierten ersten und zweiten öffentlichen kryptographischen Schlüsseln für eine Verwendung aufzuteilen ist. Dabei verwendet der dritte Algorithmus den ersten Identifikator des ersten kryptographischen Algorithmus und den zweiten Identifikator des zweiten kryptographischen Algorithmus als zweiten Parameter. So legt der dritte Algorithmus fest, dass derjenige Teil der Kombination, welche aus dem ersten öffentlichen kryptographischen Schlüssel besteht, als öffentlicher kryptographischer Schlüssel, in dem durch den ersten Identifikator identifizierten, ersten kryptographischen Algorithmus zu verwenden ist. Ferner legt der dritte Algorithmus fest, dass derjenige Teil der Kombination, welche aus dem zweiten öffentlichen kryptographischen Schlüssel besteht, als öffentlicher kryptographischer Schlüssel, in dem durch den zweiten Identifikator identifizierten, zweiten kryptographischen Algorithmus zu verwenden ist.

Im Falle eines dritten öffentlichen kryptographischen Schlüssels umfasst das Zertifikat die drei öffentlichen kryptographischen Schlüssel beispielsweise in konkatenierter Form als Kombination. Der dritten Algorithmus definiert beispielsweise, wie die Kombination mit den konkatenierten drei öffentlichen kryptographischen Schlüsseln für eine Verwendung aufzuteilen ist. Das Zertifikat ordnet die drei Identifikatoren der drei kryptographischen Algorithmen dem dritten Algorithmus als Parameter zu.

Bei dem Zertifikat handelt es sich beispielsweise um ein Public-Key-Zertifikat, bei welchem in dem Feld für den öffentlichen kryptographischen Schlüssel anstelle eines öffentlichen kryptographischen Schlüssels zwei öffentliche kryptographische Schlüssel in konkatenierter Form hinterlegt sind. Beispielsweise umfassen die in dem Feld für den öffentlichen kryptographischen Schlüssel hinterlegten Daten somit sowohl einen Signaturprüfschlüssel als auch einen Verschlüsselungsschlüssel.

Beispielsweise umfasst das Zertifikat den dritten Identifikator des dritten Algorithmus nicht als Zertifikatserweiterung, sondern als Angabe eines Algorithmus, in welchem die in konkatenierter Weise von dem Zertifikat bereitgestellten öffentlichen Schlüssel zu verwenden sind.

Beispielsweise umfasst das Zertifikat den dritten Identifikator des dritten Algorithmus als Teil der Zertifikatserweiterung.

Beispiele können den Vorteil haben, dass über den dritten Identifikator ein Algorithmus, d.h. der dritte Algorithmus, zur Verwendung des Zertifikates bzw. der vom dem Zertifikat in konkatenierter Weise umfassten öffentlichen Schlüssel eingebunden werden kann.

Über den Verweis auf den entsprechenden Algorithmus in dem Zertifikat können zusätzliche Funktionalitäten eingebunden werden, ohne dass ein dem Zertifikat zugrundeliegender Standard, wie etwa X.509, hierfür geändert werden muss.

Der entsprechende Algorithmus kann beispielsweise als zusammengesetzter Algorithmus bzw. als Gruppe von Algorithmen bereitgestellt werden, welcher einen Steueralgorithmus umfasst, der Regeln für die Verwendung der weiteren Algorithmen festlegt. Die weiteren Algorithmen umfassen beispielsweise den ersten und zweiten kryptographischen Algorithmus. Der entsprechende Algorithmus kann beispielsweise, wie ein konventioneller Algorithmus zur Verwendung eines öffentlichen kryptographischen Schlüssels verwendet werden, dessen Anwendung etwa durch einen Identifikator und passende Parameter definiert werden. Die Anwendung der weiteren Algorithmen, wie etwa des ersten und zweiten kryptographischen Algorithmus, wird beispielsweise durch Parameter des Steueralgorithmus definiert. Eine solche Verwendung eines in dem Zertifikat identifizierten Algorithmus erfordert beispielsweise keine Änderung übergeordneter Standards für Anwendungen und Protokolle eines entsprechenden Zertifikats, wie etwa X.509, RFC 5280, RFC 6960, RFC 2986, RFC 4210 und RFC 5652.

Beispielsweise handelt es sich bei dem dritten Algorithmus um einen Steueralgorithmus, welcher Syntax und Regeln für die Verwendung des ersten und zweiten kryptographischen Algorithmus unter Heranziehung der beiden in konkatenierter Form als Kombination von dem Zertifikat bereitgestellten öffentlichen kryptographischen Schlüssel. Parameter für die Verwendung des Steueralgorithmus sind beispielsweise ersten und zweiten kryptographischen Algorithmus sowie ggf. weitere Parameter für deren Verwendung.

Die Regeln des Steuerungsalgorithmus legen beispielsweise Regeln für die Verwendung des ersten und zweiten kryptographischen Algorithmus, wie etwa Verwendungszwecke fest, bzw. welche Angaben des Zertifikates als Parameter beim Anwenden der entsprechenden Regeln zu verwenden sind. Solche Angaben können beispielsweise Verwendungszwecke sein. Ferner wird beispielsweise festgelegt, wie die für den ersten und zweiten kryptographischen Algorithmus jeweils zu verwenden öffentlichen kryptographischen Schlüssel aussehen bzw. aussehen sollen. Ferner definieren die Regeln beispielsweise, wie die Kombination mit den konkatenierten ersten und zweiten öffentlichen kryptographischen Schlüsseln für eine Verwendung aufzuteilen ist. Eine Reihenfolge der einzelnen Schlüssel in der Kombination entspricht beispielsweise einer Reihenfolge der Algorithmen, d.h. des ersten und zweiten kryptographischen Algorithmus, bzw. deren Identifikatoren in den Parametern des Steueralgorithmus.

Weitere Parameter des Steueralgorithmus können für einen Signaturprüfalgorithmus beispielsweise Angaben zu einem Format der entsprechenden Signatur und zum Prüfen der Signatur umfassen.

Weitere Parameter des Steueralgorithmus können für einen Verschlüsselungsalgorithmus beispielsweise Angaben zu einem Format der verschlüsselten Daten bzw. des Ciphertextes und zum Verschlüsselungsverfahren umfassen.

Falls das Zertifikat einen entsprechenden dritten Identifikator eines dritten Algorithmus umfasst, umfasst ein Ausstellen des Zertifikats beispielsweise auch ein Bereitstellen und/oder Erstellen des entsprechenden Algorithmus. Beispielsweise werden das Zertifikat und der dritte Algorithmus zusammen, etwa als Datenbündel, bereitgestellt.

Beispielsweise ordnet das Zertifikat die ersten und zweiten Identifikatoren dem dritten Algorithmus als Parameter zu.

Beispielsweise ordnet das Zertifikat die ersten und zweiten Verwendungszwecke dem dritten Algorithmus als Parameter zu. Beispiele können somit den Vorteil haben, dass der dritte Algorithmus zusätzlich die Verwendungszwecke der beiden in konkatenierter Form hinterlegten öffentlichen kryptographischen Schlüssel festlegt.

So legt der dritte Algorithmus fest, dass derjenige Teil der Kombination, welche aus dem ersten öffentlichen kryptographischen Schlüssel besteht, als öffentlicher kryptographischer Schlüssel für einen ersten Verwendungszweck zu verwenden ist. Ferner legt der dritte Algorithmus fest, dass derjenige Teil der Kombination, welche aus dem zweiten öffentlichen kryptographischen Schlüssel besteht, als öffentlicher kryptographischer Schlüssel für einen zweiten Verwendungszweck zu verwenden ist.

Beispielsweise handelt es sich bei dem ersten Verwendungszweck um eine Signaturprüfung, während es sich bei dem zweiten Verwendungszweck um eine Verschlüsselung von Daten handelt. Beispielsweise handelt es sich bei dem ersten Verwendungszweck um eine Verschlüsselung von Daten, während es sich bei dem zweiten Verwendungszweck um eine Signaturprüfung handelt.

Die im Zertifikat definierten Verwendungszwecke werden also beispielsweise durch den dritten Algorithmus in der Kombination der beiden öffentlichen kryptographischen Schlüssel über bzw. für die einzelnen Schlüsselteile ausspezifiziert.

Beispielsweise handelt es sich bei dem ersten und dem zweiten kryptographischen Algorithmus jeweils um einen Post-Quanten-Kryptographie-Algorithmus bzw. Post-Quantum Cryptography-Algorithmus.

Klassische asymmetrische Kryptosysteme, deren Sicherheit auf der Schwierigkeit der Primfaktorzerlegung oder der Berechnung diskreter Logarithmen beruht, können mit ausreichend leistungsstarken Quantencomputern zumindest theoretisch unter Verwendung des Shor-Algorithmus gebrochen werden. Ein Beispiel für ein solches klassisches auf der Schwierigkeit der Primfaktorzerlegung beruhendes Verschlüsselungssystem ist etwa der RSA (Rivest-Shamir-Adleman)-Algorithmus. Dieser kann beispielsweise sowohl zum Verschlüsseln als auch zum digitalen Signieren verwendet werden.

Bei Verwendung zweier unabhängiger kryptographischer Algorithmen, ist es möglich sowohl für die Signaturprüfung als auch für die Verschlüsselung jeweils einen PQC-Algorithmen zu verwenden. Beispiele können den Vorteil haben, dass ein und dasselbe Zertifikat öffentliche kryptographische Schlüssel sowohl für eine quantencomputersichere Signaturprüfung als auch für eine quantencomputersichere Verschlüsselung bereitstellen kann. Durch das eine entsprechende Zertifikat wird somit beispielsweise sowohl die quantencomputersichere Signaturprüfung als auch die quantencomputersichere Verschlüsselung ermöglicht.

Als PQC-Algorithmus für die Verschlüsselung kann beispielsweise ein Algorithmus verwendet werden, welcher auf einem Lernen mit Fehlern (englisch: "learning with error"/LWE) basiert. Die zugrundeliegende Idee ist hierbei eine geheime Informationen als eine Reihe fehlerhafter Gleichungen darzustellen. Dabei wird ein Wert eines Geheimnisses verborgen, indem man ihm Rauschen zufügt.

Beispielsweise kann als PQC-Algorithmus für die Verschlüsselung ein gitterbasierter CRYSTALS-Kyber-Algorithmus verwendet werden mit einem zugehörigen öffentlichen Schlüssel. Dieses asymmetrische Kryptosystem verwendet eine Variante des Gitterproblems des Lernens mit Fehlern als grundlegende Falltürfunktion, genauer gesagt basiert das Verfahren auf module learning with errors (M-LWE) in Verbindung mit Kreisteilungs-Ringen. Beispielsweise beträgt die Größe des zugehörigen öffentlichen Schlüssels im Falle eines Kyber512-Algorithmus 800 Byte, im Falle eines Kyber768-Algorithmus 1184 Byte und im Fall eines Kyber1024-Algorithmus 1568 Byte.

Als PQC-Algorithmus für die Verschlüsselung kann beispielsweise auch ein code-basierter Algorithmus verwendet werden. Die Sicherheit dieser Algorithmen basiert auf der Schwierigkeit fehlerkorrigierte Codes zu decodieren.

Beispielsweise kann einer der folgenden code-basierten Algorithmen verwendet werden: BIKE, classic McEliece, HQC.

BIKE basiert auf QC-MDPC-Codes (englisch: "Quasi-Cyclic Moderate Density Parity-Check"). Typische Größen des öffentlichen kryptographischen Schlüssels sind: 1541 Byte für BIKE-L1, 3083 Byte für BIKE-L3, 5122 Byte für BIKE-L5.

Der classic McEliece-Algorithmus basiert auf Niederreiters dualer Version der Public-Key-Verschlüsselung von McEliece unter Verwendung binärer Goppa-Codes. Die Größe der öffentlichen Schlüssel ist abhängig von dem gewünschten Sicherheitsniveau und den in Abhängigkeit davon gewählten Parametern. Im Fall des classic McEliece348864-Algorithmus beträgt die Größe des öffentlichen kryptographischen Schlüssels 0,26 MB. Im Fall des classic McEliece8192128-Algorithmus beträgt die Größe des öffentlichen kryptographischen Schlüssels 1,36 MB. Um eine langfristige Sicherheit gewährleisten zu können, genügt aber beispielsweise bereits der classic McEliece6960119-Algorithmus, dessen öffentlicher kryptographischer Schlüssel so sicherheitsmaximiert wurde, dass er noch in 1MB passt.

Der HQC (Hamming Quasi-Cyclic) Algorithmus basiert auf einer Syndromdekodierung von Strukturcodes (englisch: "Syndrome decoding of structure codes"). Typische Größen des öffentlichen kryptographischen Schlüssels sind: 2249 Byte für HQC-128, 4522 Byte für HQC-192, 7245 Byte für HQC-256.

Als PQC-Algorithmus für die Signatur bzw. Signaturprüfung kann beispielsweise ein Algorithmus verwendet werden, welcher auf dem Short-Integer-Solution-(SIS)Problem basiert. Bei dem SIS-Problem handelt es sich um ein Durchschnittsfallproblem, das in der gitterbasierten kryptographischen Konstrukten verwendet wird. Ein entsprechendes für kryptographische Zwecke verwendetes Durchschnittsfallproblem ist für eine durchschnittliche Fallkomplexität kryptographisch hart.

Als PQC-Algorithmus für die Signatur bzw. Signaturprüfung basierend auf dem SIS-Problem kann beispielsweise einer der folgenden Algorithmen mit einem zugehörigen öffentlichen Schlüssel verwendet werden: CRYSTALS-Dilithium, FALCON.

Die Sicherheit des CRYSTALS-Dilithium-Algorithmus basiert auf der Härte von Gitterproblemen auf Modulgittern. Die Sicherheit des FALCON-Algorithmus basiert auf der Härte von NTRU-Gitterproblemen. NTRU ("N-th degree TRUncated polynomial ring")-Operationen basieren auf Objekten in einem gekürzten Polynomring mit Faltungsmultiplikation, wobei Polynome im Ring ganzzahlige Koeffizienten und einen Grad von höchstens N-1 haben. Beispielsweise beträgt die Größe des zugehörigen öffentlichen Schlüssels im Falle eines Dilithium2-Algorithmus 1312 Byte, im Fall eines Dilithium3-Algorithmus 1952 Byte und im Fall eines Dilithium5-Algorithmus 2592 Byte. Beispielsweise beträgt die Größe des zugehörigen öffentlichen Schlüssels im Falle eines Falcon512-Algorithmus 897 Byte und im Fall eines Falcon1024-Algorithmus 1793 Byte.

Als PQC-Algorithmus für die Signatur bzw. Signaturprüfung kann ferner beispielsweise ein Signaturalgorithmus mit einem hash-basierten Signaturschema verwendet werden. Hash-basierte Signaturschemata kombinieren ein Einmalsignaturschema oder ein Signaturschema, welches eine kleine Anzahl von Signaturen, etwa zehn Signaturen, erzeugen kann, mit einer Merkle-Baumstruktur. Da mit einem Einmalsignaturschlüssel nur eine einzelne Nachricht sicher signiert werden kann, ist es praktisch, viele solcher Schlüssel in einer einzigen, größeren Struktur zu kombinieren. Zu diesem Zweck wird eine Merkle-Baumstruktur verwendet. In dieser hierarchischen Datenstruktur werden eine Hash-Funktion und eine Verkettung wiederholt verwendet, um Baumknoten zu berechnen.

Als PQC-Algorithmus für die Signatur bzw. Signaturprüfung kann beispielsweise ein hashbasierter SPHINCS+-Algorithmus verwendet werden. Beispielsweise beträgt die Größe des zugehörigen öffentlichen Schlüssels im Falle eines SPHINCS+128-Algorithmus 32 Byte, im Fall eines SPHINCS+192-Algorithmus 48 Byte und im Fall eines SPHINCS+256-Algorithmus 64 Byte.

Die Grundidee des SPHINCS+-Algorithmus besteht darin, eine große Anzahl von FTS-Schlüsselpaaren (englisch: "few-time signature") mithilfe eines sogenannten Hyperbaums zu authentifizieren. Ein Hyperbaum ist ein Baum aus Merkle-Bäumen. FTS-Schemata sind Signaturschemata, die es einem Schlüsselpaar ermöglichen, eine kleine Anzahl von Signaturen zu erzeugen, beispielsweise in der Größenordnung von zehn. Für jede neue Nachricht wird ein (pseudo)zufälliges FTS-Schlüsselpaar zum Signieren der Nachricht ausgewählt. Die Signatur besteht dann aus der FTS-Signatur und den Authentifizierungsinformationen für dieses FTS-Schlüsselpaar. Bei den Authentifizierungsinformationen handelt es sich im Wesentlichen um eine Hyperbaum-Signatur, d.h. eine Signatur, die einen Zertifizierungsbaum aus Merkle-Tree-Signaturen verwendet. Der Hyperbaum ist ein Baum von hashbasierten Mehrfachsignaturen (englisch: "many-time signature"/MTS). Diese Mehrfachsignaturen ermöglichen es einem Schlüsselpaar, eine feste Anzahl N von Nachrichten zu signieren. Für SPHINCS+ ist N eine Potenz von 2. Die Authentifizierungsinformationen für ein FTS-Schlüsselpaar bestehen aus den MTS-Signaturen, die einen Pfad vom FTS-Schlüsselpaar durch den Hyperbaum zum obersten MTS-Baum bilden.

Eine MTS-Signatur ist im Fall von SPHINCS+ eine klassische Merkle-Baum-Signatur. Sie umfasst eine Einmalsignatur (englisch: "one-time signature"/OTS) für eine gegebene Nachricht sowie einen Authentifizierungspfad in dem binären Hash-Baum, der die N OTS-Schlüsselpaare eines MTS-Schlüsselpaars authentifiziert.

Der öffentliche Schlüssel von SPHINCS+ ist beispielsweise im Wesentlichen der öffentliche Schlüssel der MTS-Signatur der obersten Ebene, d.h. der Wurzelknoten seines binären Hash-Baums und daher ein einzelner Hash-Wert. Tatsächlich umfasst der öffentliche SPHINCS+-Schlüssel beispielsweise zusätzlich noch einen öffentlichen Seed-Wert mit der gleichen Länge wie der Wurzelknoten.

Die vorgenannten Signaturalgorithmen haben im Verhältnis zueinander verschiedene Vor- und Nachteile. So weist der Dilithium-Algorithmus beispielsweise eine im Vergleich schnellere Signaturgenerierung auf, während der Falcon-Algorithmus eine effizientere Signaturüberprüfung ermöglichen kann. Der Falcon-Algorithmus weist zudem im Vergleich zu dem Dilithium-Algorithmus auch geringere Schlüssel- und Signaturgrößen auf. Der SPHINCS+-Algorithmus bietet im Vergleich zu dem Dilithium-Algorithmus und dem Falcon-Algorithmus kleinere Schlüsselgrößen und größere Signaturgrößen auf. Dabei fällt die Signaturgenerierung, ebenso wie die Signaturprüfung im Fall des SPHINCS+-Algorithmus im Allgemeinen langsamer aus.

In einem weiteren Aspekt ist ein elektronisches Speichermedium offenbart, auf welchem ein digitales Zertifikat nach einem der hierin offenbarten Beispiele für ein digitales Zertifikat gespeichert ist.

Bei dem elektronischen Speichermedium handelt es sich beispielsweise um ein nicht flüchtiges elektronisches Speichermedium, d.h. ein zur dauerhaften Speicherung von Daten konfiguriertes elektronisches Speichermedium. Ein nichtflüchtiges Speichermedium kann beispielsweise als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

In einem weiteren Aspekt ist ein Verfahren offenbart zum Verwenden eines digitalen Zertifikats nach einem der hierin offenbarten Beispiele für ein digitales Zertifikat. Das Verfahren umfasst:
- ein Empfangen einer digitalen Signatur des Inhabers des Zertifikats,
- ein Empfangen des digitalen Zertifikats,
- ein Validieren der Signatur des Ausstellers des Zertifikats,
- ein Validieren der empfangenen Signatur des Inhabers des Zertifikats unter Verwendung desjenigen der beiden öffentlichen kryptographischen Schlüssel, welcher zur Verwendung in dem Signaturprüfalgorithmus als Signaturprüfschlüssel zum Prüfen von digitalen Signaturen des Inhabers des Zertifikats konfiguriert ist,
- auf eine erfolgreiche Validierung der empfangenen Signatur des Inhabers des Zertifikats hin, ein Verschlüsseln von Daten für den Inhaber des Zertifikats unter Verwendung desjenigen der beiden öffentlichen kryptographischen Schlüssel, welcher zur Verwendung in dem Verschlüsselungs- oder Schlüsselaushandlungsalgorithmus konfiguriert ist, und
- ein Senden der verschlüsselten Daten an den Inhaber des Zertifikats.

Im Falle eines Verschlüsselungsalgorithmus umfasst das Verwenden desjenigen der beiden öffentlichen kryptographischen Schlüssel, welcher zur Verwendung in dem Verschlüsselungsalgorithmus konfiguriert ist, beispielsweise ein Verschlüsseln der entsprechenden Daten mit dem entsprechenden öffentlichen kryptographischen Schlüssel.

Im Falle eines Schlüsselaushandlungsalgorithmus umfasst das Verwenden desjenigen der beiden öffentlichen kryptographischen Schlüssel, welcher zur Verwendung in dem Schlüsselaushandlungsalgorithmus konfiguriert ist, beispielsweise ein Aushandeln eines kryptographischen Schlüssels, symmetrisch oder asymmetrisch, mit dem entsprechenden öffentlichen kryptographischen Schlüssel. Die entsprechenden Daten werden dann mit dem ausgehandelten kryptographischen Schlüssel verschlüsselt.

Beispiele ermöglichen, dass ein und dasselbe Zertifikat zwei unabhängige öffentliche kryptographische Schlüssel für zwei unabhängige Zwecke bereitstellt. Einer der beiden öffentlichen kryptographischen Schlüssel ist, wie oben beschrieben, ein Signaturprüfschlüssel zum Prüfen von einer oder mehreren digitalen Signaturen des Inhabers des Zertifikats. Der andere der beiden öffentlichen kryptographischen Schlüssel ist, wie oben beschrieben, ein Verschlüsselungsschlüssel zum Verschlüsseln von Daten zur verschlüsselten Übertragung der Daten an den Inhaber des Zertifikats. Dies ist insbesondere von Vorteil, wenn es sich bei den beiden unabhängige öffentliche kryptographische Schlüssel um PQC-Schlüssel bzw. Schlüssel zur Verwendung in einem PQC-Verfahren handelt.

Zunächst wird die Signatur des Ausstellers des Zertifikats validiert. Hierzu werden beispielsweise ein oder mehrere weitere Zertifikate verwendet. Hierzu wird beispielsweise eine PKI-Zertifikatskette verwendet. Ist die Signatur des Ausstellers des Zertifikats und damit die von dem Zertifikat bereitgestellten Daten valide, so können die beiden bereitgestellten öffentlichen kryptographischen Schlüssel für eine Signaturprüfung der empfangen Signatur des Inhabers des Zertifikats sowie zu einem Verschlüsseln von Daten verwendet werden, welche an den Inhaber des Zertifikats in Antwort auf das empfangene Zertifikat gesendet werden.

Beispielsweise ist das Verfahren dazu konfiguriert, jedes der zuvor beschriebenen Beispiele für ein Zertifikat zu verwenden.

Beispielsweise ist die digitale Signatur des Inhabers des Zertifikats eine Signatur einer von dem Inhaber des Zertifikats gesendeten Nachricht, die empfangen wird. Die Signatur wird unter Verwendung des einen öffentlichen kryptographischen Schlüssels des Zertifikats validiert, um sicherzugehen, dass die entsprechende Nachricht tatsächlich von dem Inhaber des Zertifikats stammt. Ist dem so, so werden Daten für eine Antwortnachricht an den Inhaber des Zertifikats unter Verwendung des anderen öffentlichen kryptographischen Schlüssels des Zertifikats verschlüsselt und in der resultierenden verschlüsselten Form als Antwortnachricht auf die Nachricht mit der Signatur des Inhabers des Zertifikats an den entsprechenden Inhaber des Zertifikats gesendet.

Beispielsweise umfasst die Nachricht mit der Signatur des Inhabers des Zertifikats auch das entsprechende digitale Zertifikat. Beispiele können den Vorteil haben, dass das Zertifikat zum Prüfen der Signatur direkt mit der Nachricht, welche die zu prüfende Signatur umfasst, bereitgestellt wird.

Beispielsweise umfasst die Nachricht eine ID des Zertifikats. Beispielsweise umfasst das Verfahren ferner ein Senden einer Zertifikatsanfrage, welche die ID des Zertifikats umfasst, und ein Empfangen des Zertifikats in Antwort auf das Senden der Zertifikatsanfrage. Beispielsweise wird die Zertifikatsanfrage an einen Zertifikatsbereitstellungsserver gesendet.

Beispiele können den Vorteil haben, dass das Zertifikat aus einer von der Nachricht und damit dem Inhaber des Zertifikats unabhängigen Quelle abgerufen werden kann. Somit kann die Sicherheit erhöht werden, da Manipulationen erschwert werden. Für eine Manipulation wäre in diesem Fall nicht nur ein Zugriff auf die entsprechende Nachricht mit der Signatur, sondern auch auf die Quelle des Zertifikats, etwa den Zertifikatsbereitstellungsserver, notwendig.

Beispielsweise umfassen die verschlüsselten Daten eine Nachricht an den Inhaber des Zertifikats. Der Verschlüsselungsschlüssel kann somit zum Verschlüsseln einer Nachricht, etwa einer Antwortnachricht auf die empfangene Signatur bzw. auf die Nachricht des Inhabers des Zertifikats mit der empfangenen Signatur, verwendet werden.

Beispielsweise umfassen die verschlüsselten Daten einen symmetrischen kryptographischen Schlüssel. Der Verschlüsselungsschlüssel kann somit zum Verschlüsseln eines symmetrischen kryptographischen Schlüssels verwendet werden, welcher etwa in Antwort auf die empfangene Signatur bzw. auf die Nachricht des Inhabers des Zertifikats mit der empfangenen Signatur in verschlüsselter Form an den Inhaber des Zertifikats gesendet wird. Dieser symmetrischen kryptographischen Schlüssel ermöglicht beispielsweise eine verschlüsselte Kommunikation mit dem Inhaber des Zertifikats.

Beispielsweise umfasst das Verfahren ferner ein Erzeugen des entsprechenden symmetrischen kryptographischen Schlüssels.

Ein Verfahren zum Ausstellen eines digitalen Zertifikats nach einem der zuvor beschriebenen Beispiele umfasst beispielsweise ein Erstellen eines Datensatzes erstellt, welcher die von dem Zertifikat zu umfassenden Daten umfasst. Der Datensatz umfasst einen ersten öffentlichen kryptographischen Schlüssel eines ersten asymmetrischen Kryptosystems. Dem ersten öffentlichen kryptographischen Schlüssel ist ein erster kryptographischer Algorithmus zugeordnet. Der erste öffentliche kryptographische Schlüssel ist zur Verwendung in dem ersten kryptographischen Algorithmus konfiguriert. Eine kryptographische Sicherheit des ersten asymmetrischen Kryptosystems beruht auf einem ersten Typ von asymmetrischem kryptographischem Problem. Der Datensatz umfasst ferner einen zweiten öffentlichen kryptographischen Schlüssel eines zweiten asymmetrischen Kryptosystems. Dem zweiten öffentlichen kryptographischen Schlüssel ist ein zweiter kryptographischer Algorithmus zugeordnet. Der zweite öffentliche kryptographische Schlüssel ist zur Verwendung in dem zweiten kryptographischen Algorithmus konfiguriert. Eine kryptographische Sicherheit des zweiten asymmetrischen Kryptosystems beruht auf einem zweiten Typ von asymmetrischem kryptographischem Problem.

Der erste öffentliche kryptographische Schlüssel unterscheidet sich von dem zweiten öffentlichen kryptographischen Schlüssel. Der erste kryptographische Algorithmus unterscheidet sich von dem zweiten kryptographischen Algorithmus.

Der digitale Datensatz ordnet den ersten und den zweiten öffentlichen kryptographischen Schlüssel einem Inhaber des auszustellenden Zertifikats zu.

Bei einem der beiden Algorithmen handelt es sich um einen Signaturprüfalgorithmus. Der in diesem Signaturprüfalgorithmus zu verwendende öffentliche kryptographische Schlüssel ist als Signaturprüfschlüssel zum Prüfen von einer oder mehreren digitalen Signaturen des Inhabers des auszustellenden Zertifikats konfiguriert. Bei dem anderen der beiden Algorithmen handelt es sich um einen Verschlüsselungsalgorithmus. Der in diesem anderen Algorithmus zu verwendende öffentliche kryptographische Schlüssel ist als Verschlüsselungsschlüssel zum Verschlüsseln von Daten zur verschlüsselten Übertragung der Daten an den Inhaber des auszustellenden Zertifikats konfiguriert.

Beispielsweise unterscheidet sich der erste Typ von asymmetrischem kryptographischem Problem von dem zweiten Typ von asymmetrischem kryptographischem Problem. Beispielsweise umfasst der Datensatz ferner einen ersten Identifikator des ersten kryptographischen Algorithmus und einen zweiten Identifikator des zweiten kryptographischen Algorithmus.

Der Datensatz kann ferner beispielsweise ein oder mehrere der folgenden Angaben umfassen: Eine Angabe eines Namens oder einer anderen eindeutigen ID des Ausstellers des Zertifikates, Informationen zu Regeln und Verfahren, unter denen das Zertifikat ausgegeben wird, Angaben zu einer Gültigkeitsdauer des Zertifikates, eine Angabe eines Namens oder eine andere eindeutigen ID des Inhabers des Zertifikats bzw. der von dem Zertifikat umfassten öffentlichen kryptographischen Schlüssel, weitere Informationen zum Inhaber des öffentlichen kryptographischen Schlüssels, Angaben zu den zulässigen Anwendungs- und Geltungsbereichen der öffentlichen Schlüssel.

Der Datensatz wird von dem Aussteller des Zertifikats signiert. Bei der entsprechenden digitalen Signatur des Zertifikats handelt es sich beispielsweise um eine PQC-Signatur. Beispielsweise ist die Signatur des Ausstellers des Zertifikats durch eine PKI bzw. eine auf einer PKI basierende Zertifikatskette abgesichert.

Beispielsweise ist das Verfahren dazu konfiguriert, jedes der zuvor beschriebenen Beispiele für ein Zertifikat auszustellen. Umfasst das auszustellende Zertifikat ein Unterzertifikat, wird beispielsweise zuerst das entsprechende Unterzertifikat in analoger Weise zu dem Zertifikat ausgestellt oder das bereits ausgestellte Unterzertifikat wird empfangen. Anschließend wird das Unterzertifikat in den Datensatz zum Ausstellen des Zertifikats eingefügt, beispielsweise als Zertifikatserweiterung.

In einem weiteren Aspekt ist ein Computersystem offenbart, welches einen Prozessor, eine Kommunikationsschnittstelle und einen Speicher mit ausführbaren Programminstruktionen umfasst. Die Kommunikationsschnittstelle ist zur Kommunikation über ein Netzwerk konfiguriert. Ein Ausführen der Programminstruktionen durch den Prozessor veranlasst den Prozessor dazu das Computersystem zum Ausführen eines Verfahrens zum Verwenden eines digitalen Zertifikats nach einem der hierin beschriebenen Beispiele für ein digitales Zertifikat zu steuern.

Das Verfahren, welches durch das Computersystem ausgeführt wird, umfasst:
- ein Empfangen einer digitalen Signatur des Inhabers des Zertifikats unter Verwendung der Kommunikationsschnittstelle,
- ein Empfangen des digitalen Zertifikats unter Verwendung der Kommunikationsschnittstelle, ein Validieren der Signatur des Ausstellers des Zertifikats,
- ein Validieren der empfangenen Signatur des Inhabers des Zertifikats unter Verwendung desjenigen der beiden öffentlichen kryptographischen Schlüssel, welcher zur Verwendung in dem Signaturprüfalgorithmus als Signaturprüfschlüssel zum Prüfen von digitalen Signaturen des Inhabers des Zertifikats konfiguriert ist,
- auf eine erfolgreiche Validierung der empfangenen Signatur des Inhabers des Zertifikats hin, ein Verschlüsseln von Daten für den Inhaber des Zertifikats unter Verwendung desjenigen der beiden öffentlichen kryptographischen Schlüssel, welcher zur Verwendung in dem Verschlüsselungsalgorithmus zum Verschlüsseln von Daten konfiguriert ist, und
- ein Senden der verschlüsselten Daten an den Inhaber des Zertifikats unter Verwendung der Kommunikationsschnittstelle.

Im Falle eines Verschlüsselungsalgorithmus umfasst das Verwenden desjenigen der beiden öffentlichen kryptographischen Schlüssel, welcher zur Verwendung in dem Verschlüsselungsalgorithmus konfiguriert ist, beispielsweise ein Verschlüsseln der entsprechenden Daten mit dem entsprechenden öffentlichen kryptographischen Schlüssel.

Im Falle eines Schlüsselaushandlungsalgorithmus umfasst das Verwenden desjenigen der beiden öffentlichen kryptographischen Schlüssel, welcher zur Verwendung in dem Schlüsselaushandlungsalgorithmus konfiguriert ist, beispielsweise ein Aushandeln eines kryptographischen Schlüssels, symmetrisch oder asymmetrisch, mit dem entsprechenden öffentlichen kryptographischen Schlüssel. Die entsprechenden Daten werden dann mit dem ausgehandelten kryptographischen Schlüssel verschlüsselt.

Beispiele ermöglichen, dass ein und dasselbe Zertifikat, welches zwei unabhängige öffentliche kryptographische Schlüssel für zwei unabhängige Zwecke bereitstellt, für diese zwei unabhängige Zwecke verwendet werden kann. Einer der beiden öffentlichen kryptographischen Schlüssel ist, wie oben beschrieben, ein Signaturprüfschlüssel zum Prüfen von einer oder mehreren digitalen Signaturen des Inhabers des Zertifikats. Der andere der beiden öffentlichen kryptographischen Schlüssel ist, wie oben beschrieben, ein Verschlüsselungsschlüssel zum Verschlüsseln von Daten zur verschlüsselten Übertragung der Daten an den Inhaber des Zertifikats oder ein Verschlüsselungsschlüssel zum Aushandeln eines kryptographischen Schlüssels zum Verschlüsseln von Daten zur verschlüsselten Übertragung der Daten an den Inhaber des Zertifikats.

Beispielsweise ist das Computersystem dazu konfiguriert, jedes der zuvor beschriebenen Beispiele für ein Zertifikat zu verwenden. Beispielsweise ist das Computersystem dazu konfiguriert, jedes der zuvor beschriebenen Beispiele für eine Verwendung des entsprechenden Zertifikats auszuführen.

Beispielsweise ist die digitale Signatur des Inhabers des Zertifikats eine Signatur einer von dem Inhaber des Zertifikats gesendeten Nachricht, welche durch das Computersystem unter Verwendung der Kommunikationsschnittstelle empfangen wird.

Die Signatur wird unter Verwendung des einen öffentlichen kryptographischen Schlüssels des Zertifikats validiert, um sicherzugehen, dass die entsprechende Nachricht tatsächlich von dem Inhaber des Zertifikats stammt. Ist dem so, so werden Daten für eine Antwortnachricht an den Inhaber des Zertifikats unter Verwendung des anderen öffentlichen kryptographischen Schlüssels des Zertifikats verschlüsselt und in der resultierenden verschlüsselten Form als Antwortnachricht auf die Nachricht mit der Signatur des Inhabers des Zertifikats an den entsprechenden Inhaber des Zertifikats gesendet.

Beispielsweise umfasst die Nachricht das digitale Zertifikat. Beispiele können den Vorteil haben, dass das Zertifikat zum Prüfen der Signatur direkt mit der Nachricht, welche die zu prüfende Signatur umfasst, bereitgestellt wird.

Beispielsweise umfasst die Nachricht eine ID des Zertifikats. Beispielsweise umfasst das Verfahren ferner ein Senden einer Zertifikatsanfrage, welche die ID des Zertifikats umfasst, und ein Empfangen des Zertifikats in Antwort auf das Senden der Zertifikatsanfrage. Beispielsweise wird die Zertifikatsanfrage an einen Zertifikatsbereitstellungsserver gesendet.

Beispiele können den Vorteil haben, dass das Zertifikat aus einer von der Nachricht und damit dem Inhaber des Zertifikats unabhängigen Quelle abgerufen werden kann. Somit kann die Sicherheit erhöht werden, da Manipulationen erschwert werden. Für eine Manipulation wäre in diesem Fall nicht nur ein Zugriff auf die entsprechende Nachricht mit der Signatur, sondern auch auf die Quelle des Zertifikats, etwa den Zertifikatsbereitstellungsserver, notwendig.

Beispielsweise umfassen die verschlüsselten Daten eine Nachricht an den Inhaber des Zertifikats. Der Verschlüsselungsschlüssel kann somit zum Verschlüsseln einer Nachricht, etwa einer Antwortnachricht auf die empfangene Signatur bzw. auf die Nachricht des Inhabers des Zertifikats mit der empfangenen Signatur, verwendet werden. Ein und dasselbe Zertifikat ermöglicht es dem Computersystem somit beispielsweise eine empfangene Signatur zu validieren und in verschlüsselter Form auf diese Signatur zu antworten.

Beispielsweise umfassen die verschlüsselten Daten einen symmetrischen kryptographischen Schlüssel.

Der Verschlüsselungsschlüssel kann somit zum Verschlüsseln eines symmetrischen kryptographischen Schlüssels verwendet werden, welcher etwa in Antwort auf die empfangene Signatur bzw. auf die Nachricht des Inhabers des Zertifikats mit der empfangenen Signatur in verschlüsselter Form an den Inhaber des Zertifikats gesendet wird. Dieser symmetrischen kryptographischen Schlüssel ermöglicht beispielsweise eine verschlüsselte Kommunikation mit dem Inhaber des Zertifikats.

Beispielsweise umfasst das Verfahren ferner ein Erzeugen des entsprechenden symmetrischen kryptographischen Schlüssels.

Ein Computersystem zum Ausstellen eines digitalen Zertifikats, d.h., ein Ausstellercomputersystem umfasst beispielsweise einen Prozessor, eine Kommunikationsschnittstelle und einen Speicher mit ausführbaren Programminstruktionen. Die Kommunikationsschnittstelle ist beispielsweise zur Kommunikation über ein Netzwerk konfiguriert. Ein Ausführen der Programminstruktionen durch den Prozessor veranlasst den Prozessor dazu das Computersystem zum Ausführen eines Verfahrens zum Ausstellen eines digitalen Zertifikats nach einem der hierin beschrieben Beispiele für ein digitales Zertifikat zu steuern.

Das Verfahren, welches durch das Computersystem ausgeführt wird, umfasst ein Erstellen eines Datensatzes, welcher die von dem Zertifikat zu umfassenden Daten umfasst. Der Datensatz umfasst einen ersten öffentlichen kryptographischen Schlüssel eines ersten asymmetrischen Kryptosystems. Dem ersten öffentlichen kryptographischen Schlüssel ist ein erster kryptographischer Algorithmus zugeordnet. Der erste öffentliche kryptographische Schlüssel ist zur Verwendung in dem ersten kryptographischen Algorithmus konfiguriert. Eine kryptographische Sicherheit des ersten asymmetrischen Kryptosystems beruht auf einem ersten Typ von asymmetrischem kryptographischem Problem. Der Datensatz umfasst ferner einen zweiten öffentlichen kryptographischen Schlüssel eines zweiten asymmetrischen Kryptosystems. Dem zweiten öffentlichen kryptographischen Schlüssel ist ein zweiter kryptographischer Algorithmus zugeordnet. Der zweite öffentliche kryptographische Schlüssel ist zur Verwendung in dem zweiten kryptographischen Algorithmus konfiguriert. Eine kryptographische Sicherheit des zweiten asymmetrischen Kryptosystems beruht auf einem zweiten Typ von asymmetrischem kryptographischem Problem.

Der erste öffentliche kryptographische Schlüssel unterscheidet sich von dem zweiten öffentlichen kryptographischen Schlüssel. Der erste kryptographische Algorithmus unterscheidet sich von dem zweiten kryptographischen Algorithmus.

Der digitale Datensatz ordnet den ersten und den zweiten öffentlichen kryptographischen Schlüssel einem Inhaber des auszustellenden Zertifikats zu.

Bei einem der beiden Algorithmen handelt es sich um einen Signaturprüfalgorithmus. Der in diesem Signaturprüfalgorithmus zu verwendende öffentliche kryptographische Schlüssel ist als Signaturprüfschlüssel zum Prüfen von einer oder mehreren digitalen Signaturen des Inhabers des auszustellenden Zertifikats konfiguriert. Bei dem anderen der beiden Algorithmen handelt es sich um einen Verschlüsselungs- oder Schlüsselaushandlungsalgorithmus. Der in diesem anderen Algorithmus zu verwendende öffentliche kryptographische Schlüssel ist als Verschlüsselungsschlüssel zum Verschlüsseln von Daten zur verschlüsselten Übertragung der Daten an den Inhaber des auszustellenden Zertifikats konfiguriert. Der in diesem Schlüsselaushandlungsalgorithmus zu verwendende öffentliche kryptographische Schlüssel ist zum Aushandeln eines kryptographischen Schlüssels zum Verschlüsseln von Daten zur verschlüsselten Übertragung der Daten an den Inhaber des auszustellenden Zertifikats konfiguriert.

Beispielsweise unterscheidet sich der erste Typ von asymmetrischem kryptographischem Problem von dem zweiten Typ von asymmetrischem kryptographischem Problem. Beispielsweise umfasst der Datensatz ferner einen ersten Identifikator des ersten kryptographischen Algorithmus und einen zweiten Identifikator des zweiten kryptographischen Algorithmus.

Der Datensatz kann ferner beispielsweise ein oder mehrere der folgenden Angaben umfassen: Eine Angabe eines Namens oder einer anderen eindeutigen ID des Ausstellers des Zertifikates, Informationen zu Regeln und Verfahren, unter denen das Zertifikat ausgegeben wird, Angaben zu einer Gültigkeitsdauer des Zertifikates, eine Angabe eines Namens oder eine andere eindeutigen ID des Inhabers des Zertifikats bzw. der von dem Zertifikat umfassten öffentlichen kryptographischen Schlüssel, weitere Informationen zum Inhaber des öffentlichen kryptographischen Schlüssels, Angaben zu den zulässigen Anwendungs- und Geltungsbereichen der öffentlichen Schlüssel.

Der Datensatz wird von dem Aussteller des Zertifikats signiert. Bei der entsprechenden digitalen Signatur des Zertifikats handelt es sich beispielsweise um eine PQC-Signatur. Beispielsweise ist die Signatur des Ausstellers des Zertifikats durch eine PKI bzw. eine auf einer PKI basierende Zertifikatskette abgesichert.

Beispielsweise ist das Computersystem dazu konfiguriert, jedes der zuvor beschriebenen Beispiele für ein Zertifikat auszustellen. Umfasst das auszustellende Zertifikat ein Unterzertifikat, wird beispielsweise zuerst das entsprechende Unterzertifikat in analoger Weise zu dem Zertifikat ausgestellt oder das bereits ausgestellte Unterzertifikat wird empfangen. Anschließend wird das Unterzertifikat in den Datensatz zum Ausstellen des Zertifikats eingefügt, beispielsweise als Zertifikatserweiterung.

Unter einem digitalen Zertifikat wird hier ein digitaler Datensatz in strukturierter Form, etwa gemäß einem vordefinierten Standard, verstanden, dessen Authentizität und Integrität durch kryptografische Verfahren nachprüfbar abgesichert ist. Es wird von einem Aussteller bzw. einer Zertifizierungsstelle, auch Certification Authority (CA) genannt, ausgestellt und umfasst Daten, unter deren Verwendung ihre Authentizität und Integrität nachgeprüft werden kann.

Ferner umfasst das Zertifikat als Public-Key-Zertifikat, etwa nach dem Standard X.509, einen öffentlichen kryptographischen Schlüssel. Die hier beschriebenen Beispiele für ein Zertifikat umfassen sogar einen ersten und zusätzlich einen zweiten öffentlichen kryptographischen Schlüssel. Dabei bestätigt ein Public-Key-Zertifikat die Identität eines Inhabers des oder im vorliegenden Fall der bereitgestellten öffentlichen kryptographischen Schlüssel und gegebenenfalls weitere Eigenschaften der entsprechenden öffentlichen kryptographischen Schlüssel. Solche von einem Public-Key-Zertifikat bzw. einem modifizierten Public-Key-Zertifikat bereitgestellte öffentliche kryptographische Schlüssel sind dazu vorgesehen, von einem Empfänger des entsprechenden Zertifikats zum Durchführen öffentlicher kryptographischer Operationen verwendet zu werden.

Eine PKI stellt ein System zum Ausstellen, Verteilen und Prüfen digitaler Zertifikate bereit. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikats als Signaturprüfschlüssel geprüft werden kann. Um die Authentizität des Ausstellerschlüssels zu prüfen, wird beispielsweise wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Asymmetrische Schlüsselpaare bzw. asymmetrische Kryptosysteme werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher beispielsweise zur Ver- und/oder Entschlüsselung von Daten oder zum Validieren von Signaturen verwendet werden kann und an Dritte weitergegeben werden darf, sowie einem privaten Schlüssel, welcher zur inversen Ent- und/oder Verschlüsselung von Daten oder zum Erstellen von Signaturen verwendet werden kann und im Regelfall geheim gehalten werden muss.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, welche die Gültigkeit der verwendeten Schlüssel durch Zertifikate bestätigt.

Unter einem Computer bzw. Computersystem wird hier ein Gerät verstanden, welches mittels programmierbarer Rechenvorschriften Daten verarbeitet. Unter einem Programm bzw. Programminstruktionen wird hier ohne Einschränkung jede Art von Computerprogramm verstanden, welches maschinenlesbare Instruktionen zur Steuerung einer Funktionalität eines Computers umfasst. Ein Computer bzw. Computersystem kann eine Kommunikationsschnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich um ein stationäres Computersystem, wie beispielsweise einen Personalcomputer (PC) oder einen in einer Client-Server-Umgebung eingebundenen Client bzw. Server handeln. Ferner kann es sich bei einem Computersystem beispielsweise um ein mobiles Telekommunikationsgerät, insbesondere ein Smartphone, einen tragbaren Computer, wie zum Beispiel einen Laptop PC oder Palmtop-PC, ein Tablet PC, einen Personal Digital Assistant oder dergleichen handeln.

Unter einem Speicher werden hier sowohl flüchtige als auch nicht flüchtige elektronische Speicher bzw. digitale Speichermedien verstanden.

Unter einem nichtflüchtigen Speicher wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem flüchtigen elektronischen Speicher wird hier ein Speicher zur vorübergehenden Speicherung von Daten, welcher dadurch gekennzeichnet ist, dass alle Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem geschützten Speicherbereich wird hier ein Bereich eines elektronischen Speichers verstanden, auf den ein Zugriff, das heißt ein Lesezugriff oder ein Schreibzugriff, nur über einen Prozessor des entsprechenden Computersystems möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem Prozessor wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem Prozessor ein Mikroprozessor oder ein Mikroprozessorsystem aus mehreren Prozessorkernen und/oder mehreren Mikroprozessoren verstanden.

Unter einer Schnittstelle bzw. Kommunikationsschnittstelle wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Kommunikation kann beispielsweise über ein Netzwerk erfolgen. Unter einem Netzwerk wird hier jedes Übertragungsmedium mit einer Anbindung zur Kommunikation verstanden, insbesondere eine lokale Verbindung zwischen zwei oder mehr Computersystemen, ein lokales Netzwerk, insbesondere ein Local Area Network (LAN), ein privates Netzwerk, insbesondere ein Intranet, und ein virtuelles privates Netzwerk (Virtual Private Network - VPN). Ferner kann es sich um ein öffentliches Netzwerk, wie beispielsweise das Internet handeln.

Es versteht sich, dass eine oder mehrere der vorgenannten beispielhaften Ausführungsformen miteinander kombiniert werden können, solange sich die entsprechenden Beispiele nicht gegenseitig ausschließen.

### KURZE BESCHREIBUNG DER ZEICHNUNGEN

Im Folgenden werden Beispiele anhand der Zeichnungen näher erläutert. Es zeigen:
Fig. 1 ein schematisches Blockdiagramm eines exemplarischen digitalen Zertifikates,
Fig. 2 ein schematisches Blockdiagramm eines exemplarischen digitalen Zertifikates,
Fig. 3 ein schematisches Blockdiagramm eines exemplarischen digitalen Zertifikates mit Unterzertifikat,
Fig. 4 ein schematisches Blockdiagramm eines exemplarischen Unterzertifikates,
Fig. 5 ein schematisches Blockdiagramm eines exemplarischen digitalen Zertifikates,
Fig. 6 ein schematisches Blockdiagramm eines exemplarischen digitalen Zertifikates,
Fig. 7 ein schematisches Blockdiagramm eines exemplarischen Algorithmus, welcher eine Verwendung konkatenierter kryptographischer Schlüssel definiert,
Fig. 8 ein schematisches Flussdiagramm eines exemplarischen Verfahrens zum Verwenden eines digitalen Zertifikats,
Fig. 9 ein schematisches Blockdiagramm eines Systems zum Verwenden eines digitalen Zertifikats,
Fig. 10 ein schematisches Flussdiagramm eines exemplarischen Verfahrens zum Ausstellen eines digitalen Zertifikats, und
Fig. 11 ein schematisches Blockdiagramm eines exemplarischen Ausstellercomputersystems zum Ausstellen eines digitalen Zertifikats.

### DETAILLIERTE BESCHREIBUNG

Im Folgenden werden einander ähnliche Elemente mit den gleichen Bezugszeichen gekennzeichnet.

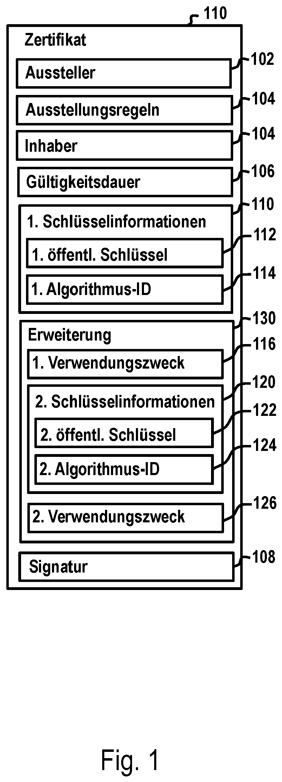

Figur 1 zeigt ein exemplarisches digitales Zertifikat 100. Das Zertifikat 100 ist ein Public-Key-Zertifikat, welches Schlüsselinformationen 110, 120 zu zwei öffentlichen kryptographischen Schlüsseln 112, 122 eines Inhabers des Zertifikats 100 bereitstellt. Das digitale Zertifikat 100 bestätigt als Public-Key-Zertifikat beispielsweise einen Inhaber des Zertifikats 100 als Eigentümer sowie weitere Eigenschaften der öffentlichen kryptographischen Schlüssel 112, 122. Unter Verwendung eines entsprechenden Public-Key-Zertifikats können Nutzer eines asymmetrischen Kryptosystems die öffentlichen kryptographischen Schlüssel 112, 122 einer Identität, beispielsweise einer Person, einer Organisation oder einem IT-System, zuordnen und Geltungsbereiche der öffentlichen kryptographischen Schlüssel 112, 122 bestimmen. Damit ermöglicht das digitale Zertifikat 100 beispielsweise den Schutz von Vertraulichkeit, Authentizität und/oder Integrität von Daten durch eine korrekte Anwendung der öffentlichen kryptographischen Schlüssel 112, 122.

Das Zertifikat 100 umfasst beispielsweise einen Namen oder eine andere eindeutige ID 102 eines Ausstellers des digitalen Zertifikats 100. Ferner umfasst das Zertifikat 100 beispielsweise Angaben zu Ausstellungsregeln 104, d.h. Informationen zu Regeln und Verfahren, unter denen das Zertifikat 100 ausgegeben wurde. Des Weiteren umfasst das Zertifikat 100 einen Namen oder eine andere eindeutige ID eines Inhabers 105 der von dem Zertifikat 100 bereitgestellten öffentlichen kryptographischen Schlüssel 112, 122. Bei diesem Inhaber der bereitgestellten öffentlichen kryptographischen Schlüssel 112, 122 handelt es sich zugleich um den Inhaber des entsprechenden Zertifikats 100 bzw. um die Person, Organisation oder das IT-System, für welches das Zertifikat 100 ausgestellt wurde. Das Zertifikat 100 umfasst beispielsweise eine Angabe zu einer Gültigkeitsdauer 106 des Zertifikates 100.

Das digitale Zertifikat 100 umfasst einen ersten öffentlichen kryptographischen Schlüssel 112 eines ersten asymmetrischen Kryptosystems. Dem ersten öffentlichen kryptographischen Schlüssel 112 ist ein erster kryptographischer Algorithmus zugeordnet. Der erste öffentliche kryptographische Schlüssel 112 ist zur Verwendung in dem ersten kryptographischen Algorithmus konfiguriert. Eine kryptographische Sicherheit des ersten asymmetrischen Kryptosystems beruht auf einem ersten Typ von asymmetrischem kryptographischem Problem. Der erste öffentliche kryptographische Schlüssel 112 ist in diesem zugeordneten ersten kryptographischen Algorithmus zu verwenden. Beispielsweise umfasst das digitale Zertifikat 100 ferner einen ersten Identifikator 114 des ersten kryptographischen Algorithmus.

Das digitale Zertifikat 100 umfasst ferner einen zweiten öffentlichen kryptographischen Schlüssel 122 eines zweiten asymmetrischen Kryptosystems. Dem zweiten öffentlichen kryptographischen Schlüssel 122 ist ein zweiter kryptographischer Algorithmus zugeordnet. Der zweite öffentliche kryptographische Schlüssel 122 ist zur Verwendung in dem zweiten kryptographischen Algorithmus konfiguriert. Eine kryptographische Sicherheit des zweiten asymmetrischen Kryptosystems beruht auf einem zweiten Typ von asymmetrischem kryptographischem Problem. Der zweite öffentliche kryptographische Schlüssel 122 ist in diesem zugeordneten zweiten kryptographischen Algorithmus zu verwenden. Beispielsweise umfasst das digitale Zertifikat 100 ferner einen zweiten Identifikator 124 des zweiten kryptographischen Algorithmus.

Der erste öffentliche kryptographische Schlüssel 112 unterscheidet sich von dem zweiten öffentlichen kryptographischen Schlüssel 122. Zudem unterscheidet sich der erste kryptographische Algorithmus von dem zweiten kryptographischen Algorithmus. Beispielsweise unterscheidet sich der erste Typ von asymmetrischem kryptographischem Problem von dem zweiten Typ von asymmetrischem kryptographischem Problem.

Das digitale Zertifikat 100 ordnet den ersten und den zweiten öffentlichen kryptographischen Schlüssel 112, 122 einem Inhaber des Zertifikats 100 zu. Beispielsweise erfolgt die Zuordnung über die Angabe 104 zum Inhaber des Zertifikates 100. Das digitale Zertifikat 100 ist von dem Aussteller des Zertifikats 100 signiert, d.h. das Zertifikat 100 umfasst eine Signatur 108 des entsprechenden Ausstellers. Bei dieser Signatur 108 handelt es sich beispielsweise um eine PQC-Signatur.

Bei einem der beiden Algorithmen, welchen die beiden öffentlichen kryptographischen Schlüssel 112, 122 zugeordnet sind, handelt es sich um einen Signaturprüfalgorithmus. Der in diesem Signaturprüfalgorithmus zu verwendende öffentliche kryptographische Schlüssel, d.h. der erste oder der zweite öffentliche kryptographische Schlüssel 112, 122, als Signaturprüfschlüssel zum Prüfen von einer oder mehreren digitalen Signaturen des Inhabers des Zertifikats 100 konfiguriert ist. Bei den entsprechenden digitalen Signaturen handelt es sich beispielsweise um Signaturen, welche der Inhaber des Zertifikats 100 unter Verwendung eines dem Signaturprüfschlüssel zugeordneten Signaturschlüssel, d.h. einem privaten kryptographischen Schlüssel, erstellt wurden.

Bei dem anderen der beiden Algorithmen, welchen die beiden öffentlichen kryptographischen Schlüssel 112, 122 zugeordnet sind, handelt es sich um einen Verschlüsselungsalgorithmus oder einen Schlüsselaushandlungsalgorithmus. Der in diesem anderen Algorithmus zu verwendende öffentliche kryptographische Schlüssel, d.h. der erste oder der zweite öffentliche kryptographische Schlüssel 112, 122, ist als Verschlüsselungsschlüssel zum Verschlüsseln von Daten zur verschlüsselten Übertragung der Daten an den Inhaber des Zertifikats 100 konfiguriert. Die entsprechenden verschlüsselten Daten sind beispielsweise unter Verwendung eines dem Verschlüsselungsschlüssel zugeordneten Entschlüsselungsschlüssel, d.h. einem privaten kryptographischen Schlüssel, verschlüsselt. Der in diesem Schlüsselaushandlungsalgorithmus zu verwendende öffentliche kryptographische Schlüssel, d.h. der erste oder der zweite öffentliche kryptographische Schlüssel 112, 122, ist als Verschlüsselungsschlüssel zum Aushandeln eines kryptographischen Schlüssels zum Verschlüsseln von Daten zur verschlüsselten Übertragung der Daten an den Inhaber des Zertifikats 100 konfiguriert. Die entsprechenden verschlüsselten Daten sind beispielsweise unter Verwendung eines dem kryptographischen Schlüssel zugeordneten Entschlüsselungsschlüssel, d.h. einem privaten kryptographischen Schlüssel, verschlüsselt.

In dem in Figur 1 gezeigten exemplarischen Zertifikat 100 handelt es sich bei den ersten Schlüsselinformationen 110 mit dem ersten öffentlichen kryptographischen Schlüssel 112 und dem ersten Identifikator 114 um Bestandteile eines Hauptteils des Zertifikats 100. Die zweiten Schlüsselinformationen 120 mit dem zweiten öffentlichen kryptographischen Schlüssel 122 und dem zweiten Identifikator 124 umfasst das digitale Zertifikat 100 beispielsweise als Teil einer Zertifikatserweiterung 130.

Das digitale Zertifikat 100 umfasst ferner beispielweise eine zusätzliche Angabe eines ersten Verwendungszwecks 116 des ersten öffentlichen kryptographischen Schlüssels 112 und eine Angabe eines zweiten Verwendungszwecks 126 des zweiten öffentlichen kryptographischen Schlüssels 122. Beispielsweise umfasst das digitale Zertifikat 100 die Angaben des ersten und zweiten Verwendungszwecks 116, 126 als Teil der Zertifikatserweiterung 130. Beispielsweise ist einer der beiden Verwendungszwecke 116, 126 eine Signaturerstellung, während der andere der beiden Verwendungszwecke 116, 126 eine Verschlüsselung ist.

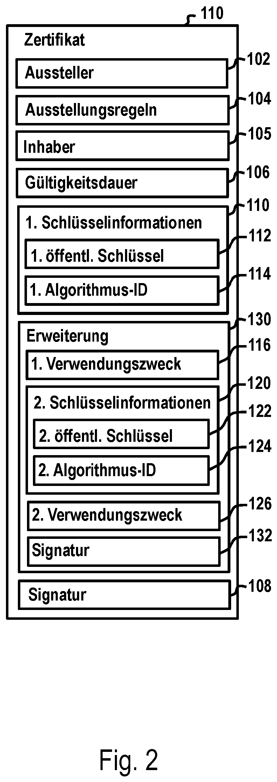

Figur 2 zeigt ein weiteres exemplarisches digitales Zertifikat 100, welches mit dem digitalen Zertifikat der Figur 1 übereinstimmt. Zusätzlich umfasst die Zertifikatserweiterung 130 des Zertifikats 100 beispielsweise eine Signatur 132 der zweiten Schlüsselinformationen 120, d.h. des zweiten öffentlichen kryptographischen Schlüssels 122 und des zweiten Identifikators 124. Ferner umfasst die Signatur 132 beispielsweise zudem den zweiten Verwendungszweck 126. Bei der Signatur 132 handelt es sich beispielsweise ebenfalls um eine Signatur des Ausstellers des Zertifikats 100. Beispielsweise handelt es sich bei der Signatur 132 um keine Signatur des Ausstellers des Zertifikats 100. Beispielsweise handelt es sich bei der Signatur 132 um eine PQC-Signatur.

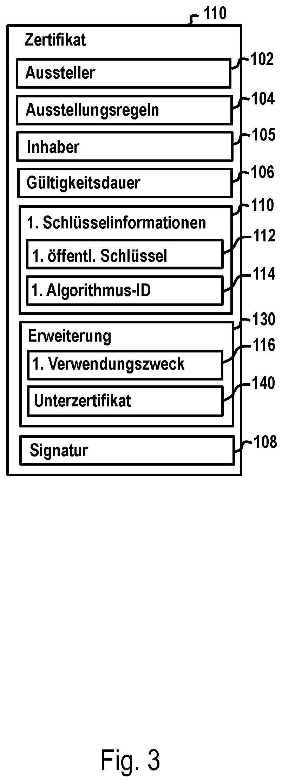

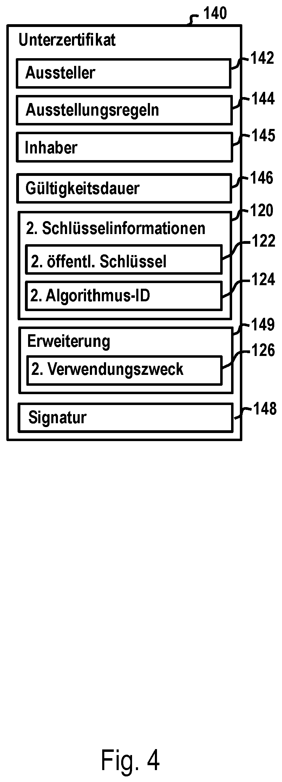

Figur 3 zeigt ein exemplarisches digitales Zertifikat 100 mit Unterzertifikat 140. Das Zertifikat 100 umfasst einen ersten öffentlichen kryptographischen Schlüssel 112 als Bestandteil eines Hauptteil des Zertifikats 100 sowie einen zweiten öffentlichen kryptographischen Schlüssel 122 als Bestandteil des Unterzertifikats 140. Das Zertifikat 100 umfasst das Unterzertifikat 140 mit dem zweiten öffentlichen kryptographischen Schlüssel 122 als Teil einer Zertifikatserweiterung 130. Das entsprechende Unterzertifikat 140 ist beispielsweise in Figur 4 in detaillierterer Form gezeigt.

Das Zertifikat 100 umfasst ferner beispielsweise einen Namen oder eine andere eindeutige ID 102 eines Ausstellers des digitalen Zertifikats 100. Ferner umfasst das Zertifikat 100 beispielsweise Angaben zu Ausstellungsregeln 104, d.h. Informationen zu Regeln und Verfahren, unter denen das Zertifikat 100 ausgegeben wurde. Des Weiteren umfasst das Zertifikat 100 einen Namen oder eine andere eindeutige ID eines Inhabers 105 des von dem Zertifikat 100 bereitgestellten ersten öffentlichen kryptographischen Schlüssels 112. Bei diesem Inhaber des bereitgestellten ersten öffentlichen kryptographischen Schlüssels 112 handelt es sich zugleich um den Inhaber des entsprechenden Zertifikats 100 bzw. um die Person, Organisation oder das IT-System, für welches das Zertifikat 100 ausgestellt wurde. Das Zertifikat 100 umfasst beispielsweise eine Angabe zu einer Gültigkeitsdauer 106 des Zertifikates 100.

Das digitale Zertifikat 100 umfasst einen ersten öffentlichen kryptographischen Schlüssel 112 eines ersten asymmetrischen Kryptosystems. Dem ersten öffentlichen kryptographischen Schlüssel 112 ist ein erster kryptographischer Algorithmus zugeordnet. Der erste kryptographische Algorithmus ist zu einer Verwendung des ersten öffentlichen Schlüssels 112 konfiguriert. Der erste öffentliche kryptographische Schlüssel 112 ist in diesem zugeordneten ersten kryptographischen Algorithmus zu verwenden. Beispielsweise umfasst das digitale Zertifikat 100 ferner einen ersten Identifikator 114 des ersten kryptographischen Algorithmus.

Das digitale Zertifikat 100 umfasst ferner einen zweiten öffentlichen kryptographischen Schlüssel 122 eines zweiten asymmetrischen Kryptosystems. Dem zweiten öffentlichen kryptographischen Schlüssel 122 ist ein zweiter kryptographischer Algorithmus zugeordnet. Diesen zweiten öffentlichen kryptographischen Schlüssel 122 umfasst das Zertifikat 100 als Bestandteil des Unterzertifikats 140, wie es beispielsweise in Figur 4 gezeigt ist.

Das Unterzertifikat 140, wie es etwa in Figur 4 gezeigt ist, umfasst zweite Schlüsselinformationen 120 mit dem entsprechenden zweiten öffentlichen kryptographischen Schlüssel 122 und einem zweiten Identifikator 124 des zweiten kryptographischen Algorithmus. Zudem umfasst das Unterzertifikat 140 beispielsweise eine Angabe 126 eines Verwendungszwecks des zweiten öffentlichen kryptographischen Schlüssels 122, etwa als eine Zertifikatserweiterung 149 des Unterzertifikats 140.

Das digitale Unterzertifikat 140 umfasst ferner beispielsweise einen Namen oder eine andere eindeutige ID 142 eines Ausstellers des Unterzertifikats 140. Ferner umfasst das Unterzertifikat 140 beispielsweise Angaben zu Ausstellungsregeln 144, d.h. Informationen zu Regeln und Verfahren, unter denen das Unterzertifikat 140 ausgegeben wurde. Des Weiteren umfasst das Unterzertifikat 140 einen Namen oder eine andere eindeutige ID eines Inhabers 145 des von dem Unterzertifikat 140 bereitgestellten zweiten öffentlichen kryptographischen Schlüssels 122. Bei diesem Inhaber des bereitgestellten zweiten öffentlichen kryptographischen Schlüssels 122 handelt es sich zugleich um den Inhaber des entsprechenden Unterzertifikats 140 bzw. um die Person, Organisation oder das IT-System, für welches das Unterzertifikat 140 ausgestellt wurde. Bei diesem Inhaber des Unterzertifikats 140 handelt es sich um den Inhaber des Zertifikats 100. Das Unterzertifikat 140 umfasst zudem beispielsweise eine Angabe zu einer Gültigkeitsdauer 106 des Zertifikates 100.

Das digitale Unterzertifikat 140 ordnet den zweiten öffentlichen kryptographischen Schlüssel 122 dem Inhaber des Unterzertifikats 140 zu, welcher beispielsweise identisch ist mit dem Inhaber des Zertifikats 100. Beispielsweise erfolgt die Zuordnung über die Angabe 144 zum Inhaber des Unterzertifikats 140. Das digitale Unterzertifikat 140 ist von dem Aussteller des Unterzertifikats 100 signiert, d.h. das Unterzertifikat 140 umfasst eine Signatur 148 des entsprechenden Ausstellers. Bei dieser Signatur 148 handelt es sich beispielsweise um eine PQC-Signatur. Beispielsweise ist der Aussteller des Unterzertifikats 140 identisch mit dem Aussteller des Zertifikats 100. Beispielsweise handelt es sich bei dem Aussteller des Unterzertifikats 140 um einen von dem Aussteller des Zertifikats 100 verschiedenen Aussteller.

Bei der Signatur 148 der zweiten Schlüsselinformationen, d.h., des zweiten öffentlichen kryptographischen Schlüssels 122 und des zweiten Identifikators 124, handelt es sich um eine Signatur 148 des Unterzertifikats 140 durch einen Aussteller des Unterzertifikats 140.

Der erste öffentliche kryptographische Schlüssel 112 unterscheidet sich von dem zweiten öffentlichen kryptographischen Schlüssel 122. Zudem unterscheidet sich der erste kryptographische Algorithmus von dem zweiten kryptographischen Algorithmus. Beispielsweise unterscheidet sich zudem der erste Typ von asymmetrischem kryptographischem Problem von dem zweiten Typ von asymmetrischem kryptographischem Problem.

Das digitale Zertifikat 100 ordnet den ersten öffentlichen kryptographischen Schlüssel 112 einem Inhaber des Zertifikats 100 zu. Beispielsweise erfolgt die Zuordnung über die Angabe 104 zum Inhaber des Zertifikates 100. Das digitale Zertifikat 100 ist von dem Aussteller des Zertifikats 100 signiert, d.h. das Zertifikat 100 umfasst eine Signatur 108 des entsprechenden Ausstellers. Bei dieser Signatur 108 handelt es sich beispielsweise um eine PQC-Signatur.

Bei einem der beiden Algorithmen, welchen die beiden öffentlichen kryptographischen Schlüssel 112, 122 zugeordnet sind, handelt es sich um einen Signaturprüfalgorithmus. Der in diesem Signaturprüfalgorithmus zu verwendende öffentliche kryptographische Schlüssel, d.h. der erste oder der zweite öffentliche kryptographische Schlüssel 112, 122, als Signaturprüfschlüssel zum Prüfen von einer oder mehreren digitalen Signaturen des Inhabers des Zertifikats 100 konfiguriert ist. Bei den entsprechenden digitalen Signaturen handelt es sich beispielsweise um Signaturen, welche der Inhaber des Zertifikats 100 unter Verwendung eines dem Signaturprüfschlüssel zugeordneten Signaturschlüssel, d.h. einem privaten kryptographischen Schlüssel, erstellt wurden.

Bei dem anderen der beiden Algorithmen, welchen die beiden öffentlichen kryptographischen Schlüssel 112, 122 zugeordnet sind, handelt es sich um einen Verschlüsselungsalgorithmus oder einen Schlüsselaushandlungsalgorithmus. Der in diesem anderen Algorithmus zu verwendende öffentliche kryptographische Schlüssel, d.h. der erste oder der zweite öffentliche kryptographische Schlüssel 112, 122, ist als Verschlüsselungsschlüssel zum Verschlüsseln von Daten zur verschlüsselten Übertragung der Daten an den Inhaber des Zertifikats 100 konfiguriert. Die entsprechenden verschlüsselten Daten sind beispielsweise unter Verwendung eines dem Verschlüsselungsschlüssel zugeordneten Entschlüsselungsschlüssel, d.h. einem privaten kryptographischen Schlüssel, verschlüsselt. Der in diesem Schlüsselaushandlungsalgorithmus zu verwendende öffentliche kryptographische Schlüssel, d.h. der erste oder der zweite öffentliche kryptographische Schlüssel 112, 122, ist als Verschlüsselungsschlüssel zum Aushandeln eines kryptographischen Schlüssels zum Verschlüsseln von Daten zur verschlüsselten Übertragung der Daten an den Inhaber des Zertifikats 100 konfiguriert. Die entsprechenden verschlüsselten Daten sind beispielsweise unter Verwendung eines dem kryptographischen Schlüssel zugeordneten Entschlüsselungsschlüssel, d.h. einem privaten kryptographischen Schlüssel, verschlüsselt.

Das digitale Zertifikat 100 umfasst ferner beispielweise eine zusätzliche Angabe eines ersten Verwendungszwecks 116 des ersten öffentlichen kryptographischen Schlüssels 112 Beispielsweise umfasst das digitale Zertifikat 100 die Angaben des ersten Verwendungszwecks 116 als Teil der Zertifikatserweiterung 130. Beispielsweise ist einer der beiden Verwendungszwecke 116, 126 eine Signaturerstellung, während der andere der beiden Verwendungszwecke 116, 126 eine Verschlüsselung ist.

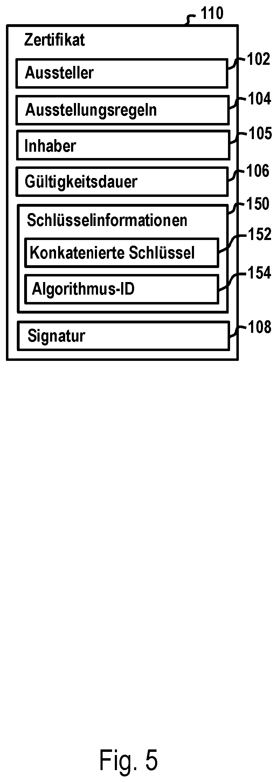

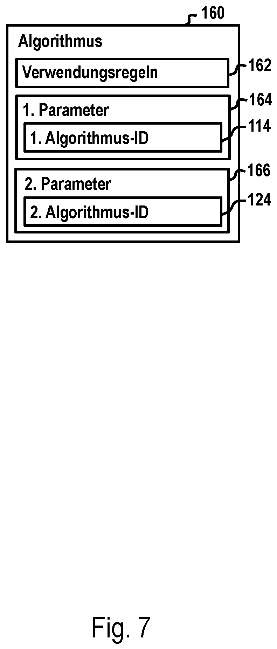

Figur 5 zeigt ein digitales Zertifikat 100, welches Schlüsselinformationen 150 mit einem ersten und einem zweiten öffentlichen kryptographischen Schlüssel in konkatenierter Form als Kombination 152 umfasst. Digitale Zertifikat 100 umfasst ferner einen Identifikator 154 eines Algorithmus 160, welcher definiert, wie die Kombination 152 mit den konkatenierten ersten und zweiten öffentlichen kryptographischen Schlüsseln für eine Verwendung aufzuteilen ist. Der entsprechende Algorithmus 160 ist in schematischer Form beispielsweise in Figur 7 gezeigt.

Das Zertifikat 100 umfasst ferner beispielsweise einen Namen oder eine andere eindeutige ID 102 eines Ausstellers des digitalen Zertifikats 100. Ferner umfasst das Zertifikat 100 beispielsweise Angaben zu Ausstellungsregeln 104, d.h. Informationen zu Regeln und Verfahren, unter denen das Zertifikat 100 ausgegeben wurde. Des Weiteren umfasst das Zertifikat 100 einen Namen oder eine andere eindeutige ID eines Inhabers 105 der von dem Zertifikat 100 in konkatenierter Form bereitgestellten öffentlichen kryptographischen Schlüssel. Bei diesem Inhaber, der in konkatenierter Form bereitgestellten öffentlichen kryptographischen Schlüssel handelt es sich zugleich um den Inhaber des entsprechenden Zertifikats 100 bzw. um die Person, Organisation oder das IT-System, für welches das Zertifikat 100 ausgestellt wurde. Das Zertifikat 100 umfasst beispielsweise eine Angabe zu einer Gültigkeitsdauer 106 des Zertifikates 100.

Das digitale Zertifikat 100 ordnet die beiden in konkatenierter Form bereitgestellten öffentlichen kryptographischen Schlüssel 112, 122 einem Inhaber des Zertifikats 100 zu. Beispielsweise erfolgt die Zuordnung über die Angabe 104 zum Inhaber des Zertifikates 100. Das digitale Zertifikat 100 ist von dem Aussteller des Zertifikats 100 signiert, d.h. das Zertifikat 100 umfasst eine Signatur 108 des entsprechenden Ausstellers. Bei dieser Signatur 108 handelt es sich beispielsweise um eine PQC-Signatur.

Die Kombination 152 des digitalen Zertifikats 100 umfasst einen ersten öffentlichen kryptographischen Schlüssel eines ersten asymmetrischen Kryptosystems. Dem ersten öffentlichen kryptographischen Schlüssel ist ein erster kryptographischer Algorithmus zugeordnet. Der erste öffentliche kryptographische Schlüssel ist zur Verwendung in dem ersten kryptographischen Algorithmus konfiguriert. Der erste öffentliche kryptographische Schlüssel ist in diesem zugeordneten ersten kryptographischen Algorithmus zu verwenden. Eine kryptographische Sicherheit des ersten asymmetrischen Kryptosystems beruht auf einem ersten Typ von asymmetrischem kryptographischem Problem.

Die Kombination 152 des digitalen Zertifikats 100 umfasst ferner einen zweiten öffentlichen kryptographischen Schlüssel eines zweiten asymmetrischen Kryptosystems. Dem zweiten öffentlichen kryptographischen Schlüssel ist ein zweiter kryptographischer Algorithmus zugeordnet. Der zweite öffentliche kryptographische Schlüssel ist zur Verwendung in dem zweiten kryptographischen Algorithmus konfiguriert. Der zweite öffentliche kryptographische Schlüssel ist in diesem zugeordneten zweiten kryptographischen Algorithmus zu verwenden. Eine kryptographische Sicherheit des zweiten asymmetrischen Kryptosystems beruht auf einem zweiten Typ von asymmetrischem kryptographischem Problem.

Der erste öffentliche kryptographische Schlüssel der Kombination 152 unterscheidet sich von dem zweiten öffentlichen kryptographischen Schlüssel der Kombination 152. Zudem unterscheidet sich der erste kryptographische Algorithmus von dem zweiten kryptographischen Algorithmus. Beispielsweise unterscheidet sich zudem der erste Typ von asymmetrischem kryptographischem Problem von dem zweiten Typ von asymmetrischem kryptographischem Problem.

Bei einem der beiden Algorithmen, welchen die beiden in konkatenierter Form bereitgestellten öffentlichen kryptographischen Schlüssel zugeordnet sind, handelt es sich um einen Signaturprüfalgorithmus. Der in diesem Signaturprüfalgorithmus zu verwendende öffentliche kryptographische Schlüssel, d.h. der erste oder der zweite öffentliche kryptographische Schlüssel der Kombination 152, als Signaturprüfschlüssel zum Prüfen von einer oder mehreren digitalen Signaturen des Inhabers des Zertifikats konfiguriert ist. Bei den entsprechenden digitalen Signaturen handelt es sich beispielsweise um Signaturen, welche der Inhaber des Zertifikats 100 unter Verwendung eines dem Signaturprüfschlüssel zugeordneten Signaturschlüssel, d.h. einem privaten kryptographischen Schlüssel, erstellt wurden.

Bei dem anderen der beiden Algorithmen, welchen die beiden öffentlichen kryptographischen Schlüssel der Kombination 152 zugeordnet sind, handelt es sich um einen Verschlüsselungsalgorithmus. Der in diesem anderen Algorithmus zu verwendende öffentliche kryptographische Schlüssel, d.h. der erste oder der zweite öffentliche kryptographische Schlüssel der Kombination 152, als Verschlüsselungsschlüssel zum Verschlüsseln von Daten zur verschlüsselten Übertragung der Daten an den Inhaber des Zertifikats 100 konfiguriert ist. Die entsprechenden verschlüsselten Daten sind beispielsweise unter Verwendung eines dem Verschlüsselungsschlüssel zugeordneten Entschlüsselungsschlüssel, d.h. einem privaten kryptographischen Schlüssel, verschlüsselt. Der in diesem Schlüsselaushandlungsalgorithmus zu verwendende öffentliche kryptographische Schlüssel, d.h. der erste oder der zweite öffentliche kryptographische Schlüssel 112, 122, ist als Verschlüsselungsschlüssel zum Aushandeln eines kryptographischen Schlüssels zum Verschlüsseln von Daten zur verschlüsselten Übertragung der Daten an den Inhaber des Zertifikats 100 konfiguriert. Die entsprechenden verschlüsselten Daten sind beispielsweise unter Verwendung eines dem kryptographischen Schlüssel zugeordneten Entschlüsselungsschlüssel, d.h. einem privaten kryptographischen Schlüssel, verschlüsselt.

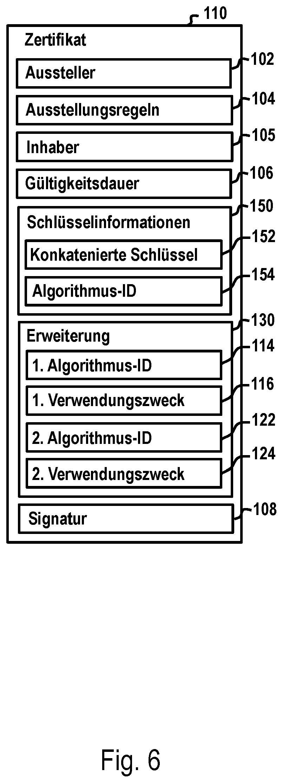

Figur 6 zeigt ein digitales Zertifikat 100, welches sämtliche Bestandteile des Zertifikats 100 aus Figur 5 umfasst. Zusätzlich umfasst das Zertifikat 100 in einer Zertifikatserweiterung 130 einen ersten Identifikator 114 des ersten kryptographischen Algorithmus und einen zweiten Identifikator 124 des zweiten kryptographischen Algorithmus. Beispielsweise ordnet das digitale Zertifikat 100 die ersten und zweiten Identifikatoren 114, 124 dem von dem Identifikator 144 identifizierten Algorithmus 160 als Parameter zu.

Das digitale Zertifikat 100 umfasst ferner beispielweise eine zusätzliche Angabe eines ersten Verwendungszwecks 116 des ersten öffentlichen kryptographischen Schlüssels 112 und eine Angabe eines zweiten Verwendungszwecks 126 des zweiten öffentlichen kryptographischen Schlüssels 122. Beispielsweise ist einer der beiden Verwendungszwecke 116, 126 eine Signaturerstellung, während der andere der beiden Verwendungszwecke 116, 126 eine Verschlüsselung ist. Die Angaben des ersten und zweiten Verwendungszwecks 116, 126 ordnet das Zertifikat 100 beispielsweise dem von dem Identifikator 144 identifizierten Algorithmus 160 als Parameter zu.

Figur 7 zeigt in schematischer Form einen exemplarischen Algorithmus 160, welchen die Zertifikate 100 der Figuren 5 und 6 mittels des Identifikators 154 identifizieren. Dieser Algorithmus definiert, etwa als ein Steueralgorithmus, eine Verwendung der in konkatenierten Form 152 von den entsprechenden Zertifikaten bereitgestellten öffentlichen kryptographischen Schlüsseln. So definiert der Algorithmus 160, wie die Kombination 152 mit den konkatenierten ersten und zweiten öffentlichen kryptographischen Schlüsseln für eine Verwendung aufzuteilen ist. Die entsprechende Aufteilung wird beispielsweise durch die von dem Algorithmus 160 umfassten Verwendungsregeln 162 definiert.

Ferner gibt der Algorithmus 160 beispielsweise erste und zweite Parameter 164, 166 zur Verwendung des ersten und zweiten kryptographischen Algorithmus an. Die ersten Parameter 164 umfassen beispielsweise einen ersten Identifikator 114 des ersten kryptographischen Algorithmus, in welchem der erste öffentliche kryptographische Schlüssel 112 zu verwenden ist. Alternativerweise kann der entsprechende erste Identifikator 114, wie etwa im Fall der Figur 6, auch von dem Zertifikat 100 angegeben werden und der Algorithmus 160 identifiziert diese Angabe als einen ersten Parameter 164. Die zweiten Parameter 166 umfassen beispielsweise einen zweiten Identifikator 124 des zweiten kryptographischen Algorithmus, in welchem der zweite öffentliche kryptographische Schlüssel 122 zu verwenden ist. Alternativerweise kann der entsprechende zweite Identifikator 124, wie etwa im Fall der Figur 6, auch von dem Zertifikat 100 angegeben werden und der Algorithmus 160 identifiziert diese Angabe als einen zweiten Parameter 166.

Zudem umfasst der Algorithmus 160 beispielsweise weitere Parameter 164, 166 zum Verwenden des ersten und zweiten öffentlichen kryptographischen Schlüssels. Beispielsweise kann der erste Parameter 164 eine Angabe eines ersten Verwendungszwecks des ersten öffentlichen kryptographischen Schlüssels umfassen. Beispielsweise kann der zweite Parameter 166 eine Angabe eines zweiten Verwendungszwecks des zweiten öffentlichen kryptographischen Schlüssels umfassen.

Beispielsweise ist der Algorithmus 160 kryptographisch signiert. Beispielsweise umfasst der Algorithmus 160 eine Signatur, bei der es sich beispielsweise um eine Signatur des Ausstellers des Zertifikats 100 handelt. Beispielsweise ist der Algorithmus 160 von einer anderen Entität signiert.

Beispielsweise handelt es sich bei dem Algorithmus 160 um einen Steueralgorithmus, welcher Syntax und Regeln für die Verwendung des ersten und zweiten kryptographischen Algorithmus unter Heranziehung der beiden in konkatenierter Form als Kombination von dem Zertifikat bereitgestellten öffentlichen kryptographischen Schlüssel. Die Regeln des Steuerungsalgorithmus 160 legen beispielsweise Regeln für die Verwendung des ersten und zweiten kryptographischen Algorithmus, wie etwa Verwendungszwecke fest, bzw. welche Angaben des Zertifikates als Parameter 164, 166 beim Anwenden der entsprechenden Regeln zu verwenden sind. Solche Angaben können beispielsweise Verwendungszwecke sein. Ferner wird beispielsweise festgelegt, wie die für den ersten und zweiten kryptographischen Algorithmus jeweils zu verwenden öffentlichen kryptographischen Schlüssel aussehen bzw. aussehen sollen. Ferner definieren die Regeln beispielsweise, wie die Kombination mit den konkatenierten ersten und zweiten öffentlichen kryptographischen Schlüsseln für eine Verwendung aufzuteilen ist. Eine Reihenfolge der einzelnen Schlüssel in der Kombination entspricht beispielsweise einer Reihenfolge der Algorithmen, d.h. des ersten und zweiten kryptographischen Algorithmus, bzw. deren Identifikatoren in den Parametern 164, 166 des Steueralgorithmus 160.

Weitere Parameter 164, 166 des Steueralgorithmus 160 können für einen Signaturprüfalgorithmus 160 beispielsweise Angaben zu einem Format der entsprechenden Signatur und zum Prüfen der Signatur umfassen. Weitere Parameter 164, 166 des Steueralgorithmus 160 können für einen Verschlüsselungsalgorithmus beispielsweise Angaben zu einem Format der verschlüsselten Daten bzw. des Ciphertextes und zum Verschlüsselungsverfahren umfassen.

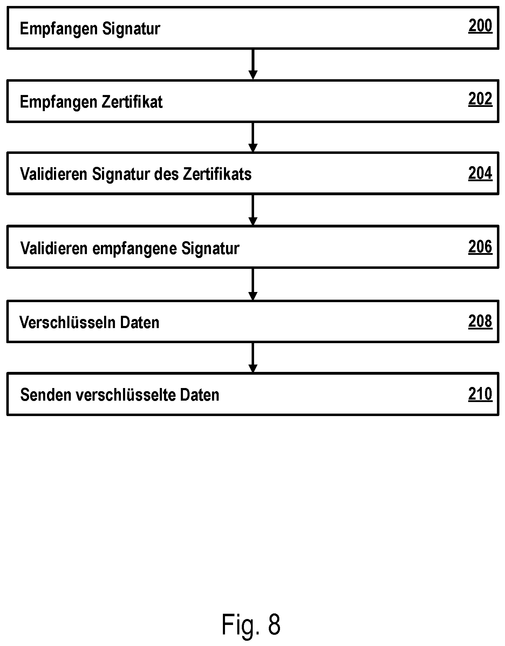

Figur 8 zeigt ein exemplarisches Verfahren zum Verwenden eines digitalen Zertifikats nach einem der hierin offenbarten Beispiele für ein digitales Zertifikat. Das Zertifikat umfasst einen ersten öffentlichen kryptographischen Schlüssel eines ersten asymmetrischen Kryptosystems. Dem ersten öffentlichen kryptographischen Schlüssel ist ein erster kryptographischer Algorithmus zugeordnet. Der erste öffentliche kryptographische Schlüssel ist zur Verwendung in dem ersten kryptographischen Algorithmus konfiguriert. Eine kryptographische Sicherheit des ersten asymmetrischen Kryptosystems beruht auf einem ersten Typ von asymmetrischem kryptographischem Problem. Das Zertifikat umfasst ferner einen zweiten öffentlichen kryptographischen Schlüssel eines zweiten asymmetrischen Kryptosystems. Dem zweiten öffentlichen kryptographischen Schlüssel ist ein zweiter kryptographischer Algorithmus zugeordnet. Der zweite öffentliche kryptographische Schlüssel ist zur Verwendung in dem zweiten kryptographischen Algorithmus konfiguriert. Eine kryptographische Sicherheit des zweiten asymmetrischen Kryptosystems beruht auf einem zweiten Typ von asymmetrischem kryptographischem Problem.

Der erste öffentliche kryptographische Schlüssel unterscheidet sich von dem zweiten öffentlichen kryptographischen Schlüssel. Der erste kryptographische Algorithmus unterscheidet sich von dem zweiten kryptographischen Algorithmus. Beispielsweise unterscheidet sich zudem der erste Typ von asymmetrischem kryptographischem Problem von dem zweiten Typ von asymmetrischem kryptographischem Problem. Beispielsweise umfasst das Zertifikat ferner einen ersten Identifikator des ersten kryptographischen Algorithmus und einen zweiten Identifikator des zweiten kryptographischen Algorithmus.

Das digitale Zertifikat ordnet den ersten und den zweiten öffentlichen kryptographischen Schlüssel einem Inhaber des Zertifikats zu. Ferner ist das digitale Zertifikat von einem Aussteller signiert.

Bei einem der beiden Algorithmen handelt es sich um einen Signaturprüfalgorithmus. Der in diesem Signaturprüfalgorithmus zu verwendende öffentliche kryptographische Schlüssel ist als Signaturprüfschlüssel zum Prüfen von einer oder mehreren digitalen Signaturen des Inhabers des Zertifikats konfiguriert. Bei dem anderen der beiden Algorithmen handelt es sich um einen Verschlüsselungs- oder Schlüsselaushandlungsalgorithmus. Der in diesem anderen Algorithmus zu verwendende öffentliche kryptographische Schlüssel ist als Verschlüsselungsschlüssel zum Verschlüsseln von Daten zur verschlüsselten Übertragung der Daten an den Inhaber des Zertifikats konfiguriert. Der in diesem Schlüsselaushandlungsalgorithmus zu verwendende öffentliche kryptographische Schlüssel ist als Verschlüsselungsschlüssel zum Aushandeln eines kryptographischen Schlüssels zum Verschlüsseln von Daten zur verschlüsselten Übertragung der Daten an den Inhaber des Zertifikats konfiguriert.

In Block 200 wird eine digitale Signatur des Inhabers des Zertifikats empfangen. Beispielsweise ist die digitale Signatur des Inhabers des Zertifikats eine Signatur einer von dem Inhaber des Zertifikats gesendeten Nachricht, die empfangen wird. In Block 202 wird das digitale Zertifikat empfangen. Beispielsweise umfasst die Nachricht mit der digitalen Signatur das digitale Zertifikat. Beispielsweise umfasst die Nachricht eine ID des Zertifikats. Beispielsweise umfasst das Verfahren ferner ein Senden einer Zertifikatsanfrage, welche die ID des Zertifikats umfasst, und ein Empfangen des Zertifikats in Antwort auf das Senden der Zertifikatsanfrage. Eine entsprechende Zertifikatsanfrage wird beispielsweise an einen Zertifikatsbereitstellungsserver gesendet.

In Block 204 wird die Signatur des Ausstellers des Zertifikats validiert. In Block 206 wird die empfangene Signatur des Inhabers des Zertifikats unter Verwendung desjenigen der beiden öffentlichen kryptographischen Schlüssel validiert, welcher zur Verwendung in dem Signaturprüfalgorithmus als Signaturprüfschlüssel zum Prüfen von digitalen Signaturen des Inhabers des Zertifikats konfiguriert ist. Auf eine erfolgreiche Validierung der empfangenen Signatur des Inhabers des Zertifikats hin, werden in Block 208 Daten für den Inhaber des Zertifikats unter Verwendung desjenigen der beiden öffentlichen kryptographischen Schlüssel verschlüsselt, welcher zur Verwendung in dem Verschlüsselungs- oder Schlüsselaushandlungsalgorithmus konfiguriert ist. Hierbei kann es sich beispielsweise um eine Verschlüsselung der entsprechenden Daten mit demjenigen der beiden öffentlichen kryptographischen Schlüssel als Verschlüsselungsschlüssel, welcher zur Verwendung in dem Verschlüsselungsalgorithmus zum Verschlüsseln von Daten konfiguriert ist. Hierbei kann es sich beispielsweise um eine Verschlüsselung der entsprechenden Daten mit einem kryptographischen Schlüssel handeln, symmetrisch oder asymmetrisch, welcher unter Verwendung desjenigen der beiden öffentlichen kryptographischen Schlüssel ausgehandelt wurde, der zur Verwendung in dem Schlüsselaushandlungsalgorithmus ist. Beispielsweise umfassen die verschlüsselten Daten eine Nachricht an den Inhaber des Zertifikats. Beispielsweise umfassen die verschlüsselten Daten einen symmetrischen kryptographischen Schlüssel, welcher etwa als ein ephemerer symmetrischer Schlüssel zum Verschlüsseln einer weiteren Kommunikation zwischen dem Empfänger der digitalen Signatur und dem Sender, d.h. dem Inhaber des digitalen Zertifikats, verwendet werden kann. In Block 210 werden die verschlüsselten Daten an den Inhaber des Zertifikats gesendet.

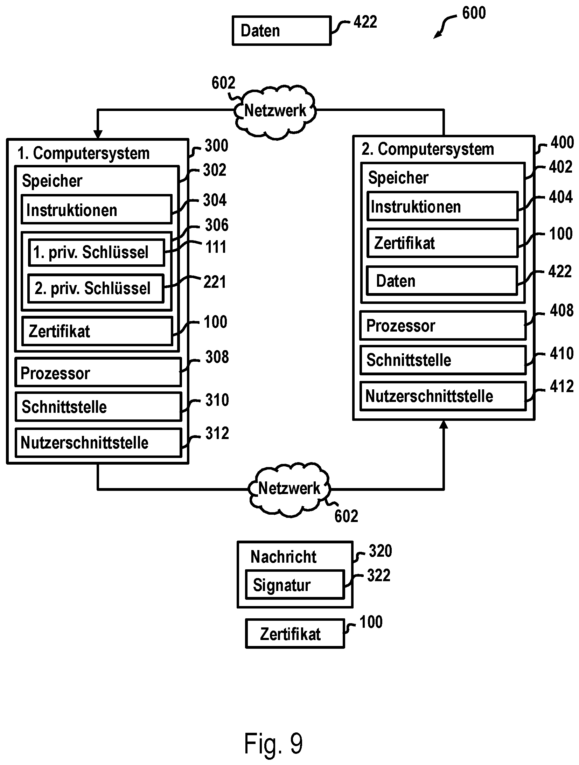

Fig. 9 zeigt ein exemplarisches System 600 zum Verwenden eines digitalen Zertifikats 100. Das System 600 umfasst ein Computersystem 400 mit einem Prozessor 408 und einem Speicher 402 mit ausführbaren Programminstruktionen 404. Das Computersystem 400 umfasst ferner eine Kommunikationsschnittstelle 410, welche konfiguriert ist zur Kommunikation über ein Netzwerk 602. Beispielsweise kann das Computersystem 400 über das Netzwerk 602 mit einem weiteren Computersystem 300 kommunizieren.

Das Computersystem 300 umfasst beispielsweise ebenfalls einen Prozessor 308 und einem Speicher 302 mit ausführbaren Programminstruktionen 303. Zudem umfasst das Computersystem 300 eine Kommunikationsschnittstelle 310, welche konfiguriert ist zur Kommunikation über ein Netzwerk 602.

Ein Ausführen der Programminstruktionen 404 durch den Prozessor 408 des Computersystems 400 veranlasst den Prozessor 408 dazu, das Computersystem 400 zum Ausführen eines Verfahrens zum Verwenden eines digitalen Zertifikats 100 zu steuern. Dieses Verfahren umfasst beispielsweise ein Empfangen einer digitalen Signatur 322 des Inhabers des Zertifikats 100 unter Verwendung der Kommunikationsschnittstelle 410. Beispielsweise empfängt das Computersystem 400 die entsprechende Signatur 322 von dem Computersystem 300 über das Netzwerk 602. Beispielsweise ist die digitale Signatur 322 eine Signatur einer von dem Inhaber des Zertifikats 100 bzw. von dem Computersystem 300, welcher der Inhabers des Zertifikats 100 verwendet, gesendete Nachricht 320, die das Computersystem 400 unter Verwendung der Kommunikationsschnittstelle 410 über das Netzwerk 602 empfängt. Zudem empfängt das Computersystem 400 das digitale Zertifikat 100, welches etwa in dem Speicher 402 gespeichert wird. Das entsprechende Zertifikat 100 empfängt das Computersystem 400 beispielsweise vor, zusammen mit oder nach der Nachricht 320. Beispielsweise umfasst die Nachricht 320 mit der digitalen Signatur 322 das digitale Zertifikat 100. Beispielsweise umfasst die Nachricht 320 eine ID des Zertifikats 100, welche es dem Computersystem 400 ermöglicht, das entsprechende Zertifikat 100 zu identifizieren. Zudem ermöglich die ID des Zertifikats 100 dem Computersystem beispielsweise das entsprechende Zertifikat 100 anzufragen. Beispielsweise sendet das Computersystem 400 eine Zertifikatsanfrage mit der ID des Zertifikats 100 und empfängt in Antwort auf das Senden der Zertifikatsanfrage das angefragte Zertifikat 100. Eine entsprechende Zertifikatsanfrage wird, etwa über das Netzwerk 602 unter Verwendung der Kommunikationsschnittstelle 410, beispielsweise an einen Zertifikatsbereitstellungsserver gesendet., von dem das Computersystem 400 das Zertifikat 100 in Antwort die Zertifikatsanfrage empfängt.

Das Zertifikat 100 umfasst einen ersten öffentlichen kryptographischen Schlüssel eines ersten asymmetrischen Kryptosystems. Dem ersten öffentlichen kryptographischen Schlüssel ist ein erster kryptographischer Algorithmus zugeordnet. Der erste öffentliche kryptographische Schlüssel ist zur Verwendung in dem ersten kryptographischen Algorithmus konfiguriert. Eine kryptographische Sicherheit des ersten asymmetrischen Kryptosystems beruht auf einem ersten Typ von asymmetrischem kryptographischem Problem. Das Zertifikat 100 umfasst ferner einen zweiten öffentlichen kryptographischen Schlüssel eines zweiten asymmetrischen Kryptosystems. Dem zweiten öffentlichen kryptographischen Schlüssel ist ein zweiter kryptographischer Algorithmus zugeordnet. Der zweite öffentliche kryptographische Schlüssel ist zur Verwendung in dem zweiten kryptographischen Algorithmus konfiguriert. Eine kryptographische Sicherheit des zweiten asymmetrischen Kryptosystems beruht auf einem zweiten Typ von asymmetrischem kryptographischem Problem.

Der erste öffentliche kryptographische Schlüssel unterscheidet sich von dem zweiten öffentlichen kryptographischen Schlüssel. Der erste kryptographische Algorithmus unterscheidet sich von dem zweiten kryptographischen Algorithmus. Beispielsweise unterscheidet sich zudem der erste Typ von asymmetrischem kryptographischem Problem von dem zweiten Typ von asymmetrischem kryptographischem Problem. Beispielsweise umfasst das Zertifikat ferner einen ersten Identifikator des ersten kryptographischen Algorithmus und einen zweiten Identifikator des zweiten kryptographischen Algorithmus.

Das digitale Zertifikat 100 ordnet den ersten und den zweiten öffentlichen kryptographischen Schlüssel einem Inhaber des Zertifikats 100 zu. Ferner ist das digitale Zertifikat 100 von einem Aussteller signiert.

Bei einem der beiden Algorithmen handelt es sich um einen Signaturprüfalgorithmus. Der in diesem Signaturprüfalgorithmus zu verwendende öffentliche kryptographische Schlüssel ist als Signaturprüfschlüssel zum Prüfen von einer oder mehreren digitalen Signaturen des Inhabers des Zertifikats 100 konfiguriert. Bei dem anderen der beiden Algorithmen handelt es sich um einen Verschlüsselungs- oder Schlüsselaushandlungsalgorithmus. Der in diesem anderen Algorithmus zu verwendende öffentliche kryptographische Schlüssel ist als Verschlüsselungsschlüssel zum Verschlüsseln von Daten zur verschlüsselten Übertragung der Daten an den Inhaber des Zertifikats 100 konfiguriert. Der in diesem Schlüsselaushandlungsalgorithmus zu verwendende öffentliche kryptographische Schlüssel ist als Verschlüsselungsschlüssel zum Aushandeln eines kryptographischen Schlüssels zum Verschlüsseln von Daten zur verschlüsselten Übertragung der Daten an den Inhaber des Zertifikats 100 konfiguriert.

Das Computersystem 400 validiert die Signatur des Ausstellers des Zertifikats 100. Zudem wird die empfangene Signatur 322 des Inhabers des Zertifikats 100 unter Verwendung desjenigen der beiden öffentlichen kryptographischen Schlüssel validiert, welcher zur Verwendung in dem Signaturprüfalgorithmus als Signaturprüfschlüssel zum Prüfen von digitalen Signaturen 322 des Inhabers des Zertifikats 100 konfiguriert ist. Auf eine erfolgreiche Validierung der empfangenen Signatur 322 des Inhabers des Zertifikats hin, werden Daten 422 für den Inhaber des Zertifikats 100 unter Verwendung desjenigen der beiden öffentlichen kryptographischen Schlüssel verschlüsselt, welcher zur Verwendung in dem Verschlüsselungs- oder Schlüsselaushandlungsalgorithmus konfiguriert ist. Im Falle eines Verschlüsselungsalgorithmus umfasst das Verwenden desjenigen der beiden öffentlichen kryptographischen Schlüssel, welcher zur Verwendung in dem Verschlüsselungsalgorithmus konfiguriert ist, beispielsweise ein Verschlüsseln der entsprechenden Daten mit dem entsprechenden öffentlichen kryptographischen Schlüssel. Im Falle eines Schlüsselaushandlungsalgorithmus umfasst das Verwenden desjenigen der beiden öffentlichen kryptographischen Schlüssel, welcher zur Verwendung in dem Schlüsselaushandlungsalgorithmus konfiguriert ist, beispielsweise ein Aushandeln eines kryptographischen Schlüssels, symmetrisch oder asymmetrisch, mit dem entsprechenden öffentlichen kryptographischen Schlüssel. Die entsprechenden Daten werden dann mit dem ausgehandelten kryptographischen Schlüssel verschlüsselt.

Beispielsweise umfasst der Speicher 402 des Computersystems 400 die entsprechenden Daten 422. Falls es sich bei den Daten 422 sensible Daten handelt, wie etwa kryptographische Schlüssel, werden die Daten 422 beispielsweise in einem geschützten Speicherbereich des Speichers 402 gespeichert.

Beispielsweise umfassen die verschlüsselten Daten 422 eine Nachricht an den Inhaber des Zertifikats 100. Beispielsweise umfassen die verschlüsselten Daten 422 einen symmetrischen kryptographischen Schlüssel, welcher etwa als ein ephemerer symmetrischer Schlüssel zum Verschlüsseln einer weiteren Kommunikation zwischen dem Empfänger der digitalen Signatur 322, d.h. dem Computersystem 400, und dem Sender, d.h. dem Computersystem 300, verwendet werden kann. Das Computersystem 400 sendet die verschlüsselten Daten 422, beispielsweise in Antwort auf die empfangene Nachricht 320, an den Inhaber des Zertifikats 100 bzw. das von diesem verwendete Computersystem 300. Dabei erfolgt das Senden beispielsweise unter Verwendung der Kommunikationsschnittstelle 410 über das Netzwerk 602.

Das Computersystem 300 verfügt beispielsweise über einen ersten und einen zweiten privaten kryptographischen Schlüssel 111, 121. Der erste private kryptographische Schlüssel 111 ist beispielsweise einem ersten der beiden von dem Zertifikat 100 umfassten öffentlichen kryptographischen Schlüssel zugeordnet. Der zweite private kryptographische Schlüssel 121 ist beispielsweise dem zweiten der beiden von dem Zertifikat 100 umfassten öffentlichen kryptographischen Schlüssel zugeordnet. Dabei handelt es sich bei einem der beiden privaten kryptographischen Schlüssel 111, 121 beispielsweise um einen Signaturschlüssel, unter dessen Verwendung das Computersystem 300 die Signatur 322 erstellt. Bei dem anderen der beiden privaten kryptographischen Schlüssel 111, 121 handelt es sich beispielsweise um einen Schlüssel, unter dessen Verwendung das Computersystem 300 die verschlüsselten Daten 422 entschlüsseln kann. Die beiden privaten kryptographischen Schlüssel 111, 121 sind beispielsweise in einem geschützten Speicherbereich 306 des Speichers 302 des Computersystems 300 gespeichert.

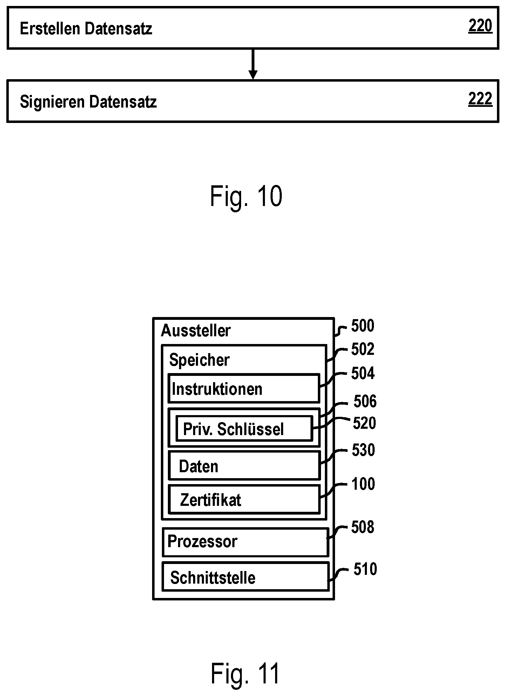

Fig. 10 zeigt ein exemplarisches Verfahren zum Ausstellen eines digitalen Zertifikats. In Block 220 wird ein Datensatz erstellt, welcher die von dem Zertifikat zu umfassenden Daten umfasst. Der Datensatz umfasst einen ersten öffentlichen kryptographischen Schlüssel eines ersten asymmetrischen Kryptosystems. Dem ersten öffentlichen kryptographischen Schlüssel ist ein erster kryptographischer Algorithmus zugeordnet. Der erste öffentliche kryptographische Schlüssel ist zur Verwendung in dem ersten kryptographischen Algorithmus konfiguriert. Eine kryptographische Sicherheit des ersten asymmetrischen Kryptosystems beruht auf einem ersten Typ von asymmetrischem kryptographischem Problem. Der Datensatz umfasst ferner einen zweiten öffentlichen kryptographischen Schlüssel eines zweiten asymmetrischen Kryptosystems. Dem zweiten öffentlichen kryptographischen Schlüssel ist ein zweiter kryptographischer Algorithmus zugeordnet. Der zweite öffentliche kryptographische Schlüssel ist zur Verwendung in dem zweiten kryptographischen Algorithmus konfiguriert. Eine kryptographische Sicherheit des zweiten asymmetrischen Kryptosystems beruht auf einem zweiten Typ von asymmetrischem kryptographischem Problem.

Der erste öffentliche kryptographische Schlüssel unterscheidet sich von dem zweiten öffentlichen kryptographischen Schlüssel. Der erste kryptographische Algorithmus unterscheidet sich von dem zweiten kryptographischen Algorithmus. Beispielsweise unterscheidet sich zudem der erste Typ von asymmetrischem kryptographischem Problem von dem zweiten Typ von asymmetrischem kryptographischem Problem. Beispielsweise umfasst der Datensatz ferner einen ersten Identifikator des ersten kryptographischen Algorithmus und einen zweiten Identifikator des zweiten kryptographischen Algorithmus.

Der digitale Datensatz ordnet den ersten und den zweiten öffentlichen kryptographischen Schlüssel einem Inhaber des auszustellenden Zertifikats zu.

Bei einem der beiden Algorithmen handelt es sich um einen Signaturprüfalgorithmus. Der in diesem Signaturprüfalgorithmus zu verwendende öffentliche kryptographische Schlüssel ist als Signaturprüfschlüssel zum Prüfen von einer oder mehreren digitalen Signaturen des Inhabers des auszustellenden Zertifikats konfiguriert. Bei dem anderen der beiden Algorithmen handelt es sich um einen Verschlüsselungs- oder Schlüsselaushandlungsalgorithmus. Der in diesem anderen Algorithmus zu verwendende öffentliche kryptographische Schlüssel ist als Verschlüsselungsschlüssel zum Verschlüsseln von Daten zur verschlüsselten Übertragung der Daten an den Inhaber des auszustellenden Zertifikats konfiguriert. Der in diesem Schlüsselaushandlungsalgorithmus zu verwendende öffentliche kryptographische Schlüssel ist als Verschlüsselungsschlüssel zum Aushandeln eines kryptographischen Schlüssels zum Verschlüsseln von Daten zur verschlüsselten Übertragung der Daten an den Inhaber des Zertifikats 100 konfiguriert.

Der Datensatz kann ferner beispielsweise ein oder mehrere der folgenden Angaben umfassen: Eine Angabe eines Namens oder einer anderen eindeutigen ID des Ausstellers des Zertifikates, Informationen zu Regeln und Verfahren, unter denen das Zertifikat ausgegeben wird, Angaben zu einer Gültigkeitsdauer des Zertifikates, eine Angabe eines Namens oder eine andere eindeutigen ID des Inhabers des Zertifikats bzw. der von dem Zertifikat umfassten öffentlichen kryptographischen Schlüssel, weitere Informationen zum Inhaber des öffentlichen kryptographischen Schlüssels, Angaben zu den zulässigen Anwendungs- und Geltungsbereichen der öffentlichen Schlüssel.

Umfasst das auszustellende Zertifikat ein Unterzertifikat, wird beispielsweise zuerst das entsprechende Unterzertifikat in analoger Weise zu dem Zertifikat ausgestellt oder das bereits ausgestellte Unterzertifikat wird empfangen. Anschließend wird das Unterzertifikat in den Datensatz zum Ausstellen des Zertifikats eingefügt, beispielsweise als Zertifikatserweiterung.

In Block 222 wird der Datensatz von dem Aussteller des Zertifikats signiert. Bei der entsprechenden digitalen Signatur des Zertifikats handelt es sich beispielsweise um eine PQC-Signatur. Beispielsweise ist die Signatur des Ausstellers des Zertifikats durch eine PKI bzw. eine auf einer PKI basierende Zertifikatskette abgesichert.

Fig. 11 zeigt ein exemplarisches Ausstellercomputersystem 500 zum Ausstellen eines digitalen Zertifikats 100. Das Computersystem 500 umfasst einen Prozessor 508 und einen Speicher 502 mit ausführbaren Programminstruktionen 505. Das Computersystem 500 umfasst ferner eine Kommunikationsschnittstelle 510, welche konfiguriert ist zur Kommunikation über ein Netzwerk. Ein Ausführen der Programminstruktionen 505 durch den Prozessor 508 des Computersystems 500 veranlasst den Prozessor 508 dazu, das Computersystem 500 zum Ausstellen des digitalen Zertifikats 100 zu steuern. Dieses Verfahren umfasst beispielsweise ein Erstellen eines Datensatzes unter Verwendung von Daten 530, welche beispielsweise in dem Speicher 502 gespeichert sind. Der entsprechende Datensatz umfasst die von dem Zertifikat 100 zu umfassenden Daten 530. Der Datensatz umfasst einen ersten öffentlichen kryptographischen Schlüssel eines ersten asymmetrischen Kryptosystems. Dem ersten öffentlichen kryptographischen Schlüssel ist ein erster kryptographischer Algorithmus zugeordnet. Der erste öffentliche kryptographische Schlüssel ist zur Verwendung in dem ersten kryptographischen Algorithmus konfiguriert. Eine kryptographische Sicherheit des ersten asymmetrischen Kryptosystems beruht auf einem ersten Typ von asymmetrischem kryptographischem Problem.

Der Datensatz umfasst ferner einen zweiten öffentlichen kryptographischen Schlüssel eines zweiten asymmetrischen Kryptosystems. Dem zweiten öffentlichen kryptographischen Schlüssel ist ein zweiter kryptographischer Algorithmus zugeordnet. Der zweite öffentliche kryptographische Schlüssel ist zur Verwendung in dem zweiten kryptographischen Algorithmus konfiguriert. Eine kryptographische Sicherheit des zweiten asymmetrischen Kryptosystems beruht auf einem zweiten Typ von asymmetrischem kryptographischem Problem.

Der erste öffentliche kryptographische Schlüssel unterscheidet sich von dem zweiten öffentlichen kryptographischen Schlüssel. Der erste kryptographische Algorithmus unterscheidet sich von dem zweiten kryptographischen Algorithmus. Beispielsweise unterscheidet sich zudem der erste Typ von asymmetrischem kryptographischem Problem von dem zweiten Typ von asymmetrischem kryptographischem Problem. Beispielsweise umfasst der Datensatz ferner einen ersten Identifikator des ersten kryptographischen Algorithmus und einen zweiten Identifikator des zweiten kryptographischen Algorithmus.

Der digitale Datensatz ordnet den ersten und den zweiten öffentlichen kryptographischen Schlüssel einem Inhaber des auszustellenden Zertifikats 100 zu.

Bei einem der beiden Algorithmen handelt es sich um einen Signaturprüfalgorithmus. Der in diesem Signaturprüfalgorithmus zu verwendende öffentliche kryptographische Schlüssel ist als Signaturprüfschlüssel zum Prüfen von einer oder mehreren digitalen Signaturen des Inhabers des auszustellenden Zertifikats 100 konfiguriert. Bei dem anderen der beiden Algorithmen handelt es sich um einen Verschlüsselungs- oder Schlüsselaushandlungsalgorithmus. Der in diesem anderen Algorithmus zu verwendende öffentliche kryptographische Schlüssel ist als Verschlüsselungsschlüssel zum Verschlüsseln von Daten zur verschlüsselten Übertragung der Daten an den Inhaber des auszustellenden Zertifikats 100 konfiguriert. Der in diesem Schlüsselaushandlungsalgorithmus zu verwendende öffentliche kryptographische Schlüssel ist als Verschlüsselungsschlüssel zum Aushandeln eines kryptographischen Schlüssels zum Verschlüsseln von Daten zur verschlüsselten Übertragung der Daten an den Inhaber des Zertifikats 100 konfiguriert.

Der Datensatz kann ferner beispielsweise ein oder mehrere der folgenden Angaben umfassen: Eine Angabe eines Namens oder einer anderen eindeutigen ID des Ausstellers des Zertifikates 100, Informationen zu Regeln und Verfahren, unter denen das Zertifikat 100 ausgegeben wird, Angaben zu einer Gültigkeitsdauer des Zertifikates 100, eine Angabe eines Namens oder eine andere eindeutigen ID des Inhabers des Zertifikats 100 bzw. der von dem Zertifikat 100 umfassten öffentlichen kryptographischen Schlüssel, weitere Informationen zum Inhaber des öffentlichen kryptographischen Schlüssels, Angaben zu den zulässigen Anwendungs- und Geltungsbereichen der öffentlichen Schlüssel.

Umfasst das auszustellende Zertifikat 100 ein Unterzertifikat, wird beispielsweise zuerst das entsprechende Unterzertifikat in analoger Weise zu dem Zertifikat 100 ausgestellt oder das bereits ausgestellte Unterzertifikat wird empfangen. Anschließend wird das Unterzertifikat in den Datensatz zum Ausstellen des Zertifikats 100 eingefügt, beispielsweise als Zertifikatserweiterung.

Zum Ausstellen des Zertifikates 100 wird der erstellte Datensatz von dem Ausstellercomputersystem signiert. Bei der entsprechenden digitalen Signatur des Zertifikats 100 handelt es sich beispielsweise um eine PQC-Signatur. Beispielsweise ist die Signatur des Zertifikats 100 durch eine PKI bzw. eine auf einer PKI basierende Zertifikatskette abgesichert.

Zum Signieren des Datensatzes verwendet das Ausstellercomputersystem beispielsweise einen privaten kryptographischen Schlüssel 520, welcher in einem geschützten Speicherbereich 506 des Speichers 502 des Ausstellercomputersystems 500 gespeichert ist.

Obwohl die Erfindung in den Zeichnungen und der vorstehenden Beschreibung ausführlich veranschaulicht und beschrieben ist, ist diese Veranschaulichung und Beschreibung als beispielhaft und nicht einschränkend zu betrachten; die Erfindung ist nicht auf die offenbarten Ausführungsformen beschränkt.

Beispiele können ferner folgende Merkmalskombinationen umfassen:
1. Digitales Zertifikat, wobei das digitale Zertifikat einen ersten öffentlichen kryptographischen Schlüssel eines ersten asymmetrischen Kryptosystems umfasst, wobei dem ersten öffentlichen kryptographischen Schlüssel ein erster kryptographischer Algorithmus zugeordnet ist, wobei der erste öffentliche kryptographische Schlüssel zur Verwendung in dem ersten kryptographischen Algorithmus konfiguriert ist, wobei eine kryptographische Sicherheit des ersten asymmetrischen Kryptosystems auf einem ersten Typ von asymmetrischem kryptographischem Problem beruht,
   wobei das digitale Zertifikat ferner einen zweiten öffentlichen kryptographischen Schlüssel eines zweiten asymmetrischen Kryptosystems umfasst, wobei dem zweiten öffentlichen kryptographischen Schlüssel ein zweiter kryptographischer Algorithmus zugeordnet ist, wobei der zweite öffentliche kryptographische Schlüssel zur Verwendung in dem zweiten kryptographischen Algorithmus konfiguriert ist, wobei eine kryptographische Sicherheit des zweiten asymmetrischen Kryptosystems auf einem zweiten Typ von asymmetrischem kryptographischem Problem beruht,
   wobei sich der erste öffentliche kryptographische Schlüssel von dem zweiten öffentlichen kryptographischen Schlüssel unterscheidet, wobei sich der erste kryptographische Algorithmus von dem zweiten kryptographischen Algorithmus unterscheidet,
   wobei das digitale Zertifikat den ersten und den zweiten öffentlichen kryptographischen Schlüssel einem Inhaber des Zertifikats zuordnet, wobei das digitale Zertifikat von einem Aussteller signiert ist,
   wobei es sich bei einem der beiden Algorithmen um einen Signaturprüfalgorithmus handelt und der in diesem Signaturprüfalgorithmus zu verwendende öffentliche kryptographische Schlüssel als Signaturprüfschlüssel zum Prüfen von einer oder mehreren digitalen Signaturen des Inhabers des Zertifikats konfiguriert ist,
   wobei es sich bei dem anderen der beiden Algorithmen um einen Verschlüsselungs- oder Schlüsselaushandlungsalgorithmus handelt und der in diesem anderen Algorithmus zu verwendende öffentliche kryptographische Schlüssel als Verschlüsselungsschlüssel zum Verschlüsseln von Daten oder zum Aushandeln eines kryptographischen Schlüssels zur verschlüsselten Übertragung von Daten an den Inhaber des Zertifikats konfiguriert ist.
2. Digitales Zertifikat nach Merkmalskombination 1, wobei sich der erste Typ von asymmetrischem kryptographischem Problem von dem zweiten Typ von asymmetrischem kryptographischem Problem unterscheidet.
3. Digitales Zertifikat nach einer der vorangehenden Merkmalskombinationen, wobei das digitale Zertifikat ferner einen ersten Identifikator des ersten kryptographischen Algorithmus und einen zweiten Identifikator des zweiten kryptographischen Algorithmus umfasst.
4. Digitales Zertifikat nach Merkmalskombination 3, wobei es sich bei dem ersten öffentlichen kryptographischen Schlüssel und dem ersten Identifikator um Bestandteile eines Hauptteils des Zertifikats handelt,
   wobei das digitale Zertifikat den zweiten öffentlichen kryptographischen Schlüssel und den zweiten Identifikator als Teil einer Zertifikatserweiterung umfasst.
5. Digitales Zertifikat nach Merkmalskombination 4, wobei die Zertifikatserweiterung eine Signatur des zweiten öffentlichen kryptographischen Schlüssels und des zweiten Identifikators umfasst.
6. Digitales Zertifikat nach Merkmalskombination 5, wobei die Zertifikatserweiterung den zweiten öffentlichen kryptographischen Schlüssel und den zweiten Identifikator in Form eines von dem digitalen Zertifikat umfassten Unterzertifikats umfasst, wobei das Unterzertifikat den zweiten öffentlichen kryptographischen Schlüssel und den zweiten Identifikator umfasst, wobei es sich bei der Signatur des zweiten öffentlichen kryptographischen Schlüssels und des zweiten Identifikators um eine Signatur des Unterzertifikats durch einen Aussteller des Unterzertifikats handelt.
7. Digitales Zertifikat nach Merkmalskombination 6, wobei der Aussteller des Zertifikats verschieden ist von dem Aussteller des Unterzertifikats.
8. Digitales Zertifikat nach Merkmalskombination 6, wobei der Aussteller des Zertifikats identisch ist mit dem Aussteller des Unterzertifikats.
9. Digitales Zertifikat nach einer der vorangehenden Merkmalskombinationen, wobei das digitale Zertifikat ferner eine zusätzliche Angabe eines ersten Verwendungszwecks des ersten öffentlichen kryptographischen Schlüssels umfasst.
10. Digitales Zertifikat nach einer der vorangehenden Merkmalskombinationen, wobei das digitale Zertifikat ferner eine zusätzliche Angabe eines zweiten Verwendungszwecks des zweiten öffentlichen kryptographischen Schlüssels umfasst.
11. Digitales Zertifikat nach Merkmalskombination 9 und 10, wobei einer der beiden Verwendungszwecke eine Signaturerstellung ist, wobei der andere der beiden Verwendungszwecke eine Verschlüsselung ist.
12. Digitales Zertifikat nach einer der Merkmalskombinationen 1 bis 2, wobei das digitale Zertifikat den ersten und den zweiten öffentlichen kryptographischen Schlüssel in konkatenierter Form als Kombination umfasst, wobei das digitale Zertifikat ferner einen dritten Identifikator eines dritten Algorithmus umfasst, welcher definiert, wie die Kombination mit den konkatenierten ersten und zweiten öffentlichen kryptographischen Schlüsseln für eine Verwendung aufzuteilen ist.
13. Digitales Zertifikat nach Merkmalskombination 12, wobei das digitale Zertifikat die ersten und zweiten Identifikatoren dem dritten Algorithmus als Parameter zuordnet.
14. Digitales Zertifikat nach einer der Merkmalskombinationen 12 bis 13, wobei das digitale Zertifikat die ersten und zweiten Verwendungszwecke dem dritten Algorithmus als Parameter zuordnet.
15. Digitales Zertifikat nach einer der vorangehenden Merkmalskombinationen, wobei es sich bei dem ersten und dem zweiten kryptographischen Algorithmus jeweils um einen Post-Quanten-Kryptographie-Algorithmus handelt.
16. Elektronisches Speichermedium, auf welchem ein digitales Zertifikat nach einer der vorangehenden Merkmalskombinationen gespeichert ist.
17. Verfahren zum Verwenden eines digitalen Zertifikats nach einer der Merkmalskombinationen 1 bis 15,
   wobei das Verfahren umfasst:
   ein Empfangen einer digitalen Signatur des Inhabers des Zertifikats,
   ein Empfangen des digitalen Zertifikats,
   ein Validieren der Signatur des Ausstellers des Zertifikats,
   ein Validieren der empfangenen Signatur des Inhabers des Zertifikats unter Verwendung desjenigen der beiden öffentlichen kryptographischen Schlüssel, welcher zur Verwendung in dem Signaturprüfalgorithmus als Signaturprüfschlüssel zum Prüfen von digitalen Signaturen des Inhabers des Zertifikats konfiguriert ist,
   auf eine erfolgreiche Validierung der empfangenen Signatur des Inhabers des Zertifikats hin, ein Verschlüsseln von Daten für den Inhaber des Zertifikats unter Verwendung desjenigen der beiden öffentlichen kryptographischen Schlüssel, welcher zur Verwendung in dem Verschlüsselungs- oder Schlüsselaushandlungsalgorithmus konfiguriert ist, und
   ein Senden der verschlüsselten Daten an den Inhaber des Zertifikats.
18. Verfahren nach Merkmalskombination 17, wobei die digitale Signatur des Inhabers des Zertifikats eine Signatur einer von dem Inhaber des Zertifikats gesendeten Nachricht ist, die empfangen wird.
19. Verfahren nach Merkmalskombination 18, wobei die Nachricht das digitale Zertifikat umfasst.
20. Verfahren nach einer der Merkmalskombinationen 17 bis 19, wobei die verschlüsselten Daten eine Nachricht an den Inhaber des Zertifikats umfassen.
21. Verfahren nach einer der Merkmalskombinationen 17 bis 19, wobei die verschlüsselten Daten einen symmetrischen kryptographischen Schlüssel umfassen.
22. Computersystem umfassend einen Prozessor, eine Kommunikationsschnittstelle und einen Speicher mit ausführbaren Programminstruktionen, wobei die Kommunikationsschnittstelle konfiguriert ist zur Kommunikation über ein Netzwerk, wobei ein Ausführen der Programminstruktionen durch den Prozessor den Prozessor dazu veranlasst das Computersystem zum Ausführen eines Verfahrens zum Verwenden eines digitalen Zertifikats nach einer der Merkmalskombinationen 1 bis 15 zu steuern,
   wobei das Verfahren durch das Computersystem umfasst:
   ein Empfangen einer digitalen Signatur des Inhabers des Zertifikats unter Verwendung der Kommunikationsschnittstelle,
   ein Empfangen des digitalen Zertifikats unter Verwendung der Kommunikationsschnittstelle,
   ein Validieren der Signatur des Ausstellers des Zertifikats,
   ein Validieren der empfangenen Signatur des Inhabers des Zertifikats unter Verwendung desjenigen der beiden öffentlichen kryptographischen Schlüssel, welcher zur Verwendung in dem Signaturprüfalgorithmus als Signaturprüfschlüssel zum Prüfen von digitalen Signaturen des Inhabers des Zertifikats konfiguriert ist,
   auf eine erfolgreiche Validierung der empfangenen Signatur des Inhabers des Zertifikats hin, ein Verschlüsseln von Daten für den Inhaber des Zertifikats unter Verwendung desjenigen der beiden öffentlichen kryptographischen Schlüssel, welcher zur Verwendung in dem Verschlüsselungs- oder Schlüsselaushandlungsalgorithmus konfiguriert ist, und
   ein Senden der verschlüsselten Daten an den Inhaber des Zertifikats unter Verwendung der Kommunikationsschnittstelle.
23. Computersystem nach Merkmalskombination 22, wobei die digitale Signatur des Inhabers des Zertifikats eine Signatur einer von dem Inhaber des Zertifikats gesendeten Nachricht ist, welche durch das Computersystem unter Verwendung der Kommunikationsschnittstelle empfangen wird.
24. Computersystem nach Merkmalskombination 23, wobei die Nachricht das digitale Zertifikat umfasst.
25. Computersystem nach einer der Merkmalskombinationen 22 bis 24, wobei die verschlüsselten Daten eine Nachricht an den Inhaber des Zertifikats umfassen.
26. Computersystem nach einer der Merkmalskombinationen 22 bis 24, wobei die verschlüsselten Daten einen symmetrischen kryptographischen Schlüssel umfassen.

### LISTE DER BEZUGSZEICHEN

- 100: Zertifikat
- 102: Aussteller
- 104: Ausstellungsregeln
- 105: Inhaber
- 106: Gültigkeitsdauer
- 108: Signatur
- 110: erste Schlüsselinformationen
- 111: erster privater kryptographischer Schlüssel
- 112: erster öffentlicher kryptographischer Schlüssel
- 114: erster Identifikator
- 116: erster Verwendungszweck
- 120: zweite Schlüsselinformationen
- 121: zweiter privater kryptographischer Schlüssel
- 122: zweiter öffentlicher kryptographischer Schlüssel
- 124: zweiter Identifikator
- 126: zweiter Verwendungszweck
- 130: Zertifikatserweiterung
- 132: Signatur
- 140: Unterzertifikat
- 142: Aussteller
- 144: Ausstellungsregeln
- 145: Inhaber
- 146: Gültigkeitsdauer
- 148: Signatur
- 149: Zertifikatserweiterung
- 150: Schlüsselinformationen
- 152: konkatenierter Schlüssel
- 154: dritter Identifikator
- 160: dritter Algorithmus
- 162: Verwendungsregeln
- 164: erste Parameter
- 166: zweite Parameter
- 300: Computersystem
- 302: Speicher
- 304: Programminstruktionen
- 306: geschützter Speicherbereich
- 308: Prozessor
- 310: Kommunikationsschnittstelle
- 312: Nutzerschnittstelle
- 320: Nachricht
- 322: Signatur
- 400: Computersystem
- 402: Speicher
- 404: Programminstruktionen
- 408: Prozessor
- 410: Kommunikationsschnittstelle
- 412: Nutzerschnittstelle
- 422: Daten
- 500: Ausstellercomputersystem
- 502: Speicher
- 504: Programminstruktionen
- 506: geschützter Speicherbereich
- 508: Prozessor
- 510: Kommunikationsschnittstelle
- 520: privater kryptographischer Schlüssel
- 530: Daten
- 600: System

## Patentansprüche

1. Digitales Zertifikat (100), wobei das digitale Zertifikat (100) einen ersten öffentlichen kryptographischen Schlüssel (112) eines ersten asymmetrischen Kryptosystems umfasst, wobei dem ersten öffentlichen kryptographischen Schlüssel (112) ein erster kryptographischer Algorithmus zugeordnet ist, wobei der erste öffentliche kryptographische Schlüssel (112) zur Verwendung in dem ersten kryptographischen Algorithmus konfiguriert ist, wobei eine kryptographische Sicherheit des ersten asymmetrischen Kryptosystems auf einem ersten Typ von asymmetrischem kryptographischem Problem beruht,
wobei das digitale Zertifikat (100) ferner einen zweiten öffentlichen kryptographischen Schlüssel (122) eines zweiten asymmetrischen Kryptosystems umfasst, wobei dem zweiten öffentlichen kryptographischen Schlüssel (122) ein zweiter kryptographischer Algorithmus zugeordnet ist, wobei der zweite öffentliche kryptographische Schlüssel (122) zur Verwendung in dem zweiten kryptographischen Algorithmus konfiguriert ist, wobei eine kryptographische Sicherheit des zweiten asymmetrischen Kryptosystems auf einem zweiten Typ von asymmetrischem kryptographischem Problem beruht,
wobei sich der erste öffentliche kryptographische Schlüssel (112) von dem zweiten öffentlichen kryptographischen Schlüssel (122) unterscheidet, wobei sich der erste kryptographische Algorithmus von dem zweiten kryptographischen Algorithmus unterscheidet,
wobei das digitale Zertifikat (100) den ersten und den zweiten öffentlichen kryptographischen Schlüssel (112; 122) einem Inhaber des Zertifikats (100) zuordnet, wobei das digitale Zertifikat (100) von einem Aussteller signiert ist,
wobei es sich bei einem der beiden Algorithmen um einen Signaturprüfalgorithmus handelt und der in diesem Signaturprüfalgorithmus zu verwendende öffentliche kryptographische Schlüssel als Signaturprüfschlüssel zum Prüfen von einer oder mehreren digitalen Signaturen (322) des Inhabers des Zertifikats (100) konfiguriert ist,
wobei es sich bei dem anderen der beiden Algorithmen um einen Verschlüsselungs- oder Schlüsselaushandlungsalgorithmus handelt und der in diesem anderen Algorithmus zu verwendende öffentliche kryptographische Schlüssel als Verschlüsselungsschlüssel zum Verschlüsseln von Daten (422) oder zum Aushandeln eines kryptographischen Schlüssels zur verschlüsselten Übertragung von Daten (422) an den Inhaber des Zertifikats (100) konfiguriert ist.

2. Digitales Zertifikat (100) nach Anspruch 1, wobei sich der erste Typ von asymmetrischem kryptographischem Problem von dem zweiten Typ von asymmetrischem kryptographischem Problem unterscheidet.

3. Digitales Zertifikat (100) nach einem der vorangehenden Ansprüche, wobei das digitale Zertifikat (100) ferner einen ersten Identifikator (114) des ersten kryptographischen Algorithmus und einen zweiten Identifikator (124) des zweiten kryptographischen Algorithmus umfasst.

4. Digitales Zertifikat (100) nach Anspruch 3, wobei es sich bei dem ersten öffentlichen kryptographischen Schlüssel (112) und dem ersten Identifikator (114) um Bestandteile eines Hauptteils des Zertifikats (100) handelt,
wobei das digitale Zertifikat (100) den zweiten öffentlichen kryptographischen Schlüssel (122) und den zweiten Identifikator (124) als Teil einer Zertifikatserweiterung (130) umfasst.

5. Digitales Zertifikat (100) nach Anspruch 4, wobei die Zertifikatserweiterung (130) eine Signatur (132; 148) des zweiten öffentlichen kryptographischen Schlüssels (122) und des zweiten Identifikators (124) umfasst.

6. Digitales Zertifikat (100) nach Anspruch 5, wobei die Zertifikatserweiterung (130) den zweiten öffentlichen kryptographischen Schlüssel (122) und den zweiten Identifikator (124) in Form eines von dem digitalen Zertifikat (100) umfassten Unterzertifikats (140) umfasst, wobei das Unterzertifikat (140) den zweiten öffentlichen kryptographischen Schlüssel (122) und den zweiten Identifikator (124) umfasst, wobei es sich bei der Signatur (148) des zweiten öffentlichen kryptographischen Schlüssels (122) und des zweiten Identifikators (124) um eine Signatur (148) des Unterzertifikats (140) durch einen Aussteller des Unterzertifikats (140) handelt.

7. Digitales Zertifikat (100) nach Anspruch 6, wobei der Aussteller des Zertifikats (100) verschieden ist von dem Aussteller des Unterzertifikats (140) oder
wobei der Aussteller des Zertifikats (100) identisch ist mit dem Aussteller des Unterzertifikats (140).

8. Digitales Zertifikat (100) nach einem der vorangehenden Ansprüche, wobei das digitale Zertifikat (100) ferner eine zusätzliche Angabe eines ersten Verwendungszwecks (116) des ersten öffentlichen kryptographischen Schlüssels (112) umfasst und/oder
wobei das digitale Zertifikat (100) ferner eine zusätzliche Angabe eines zweiten Verwendungszwecks (126) des zweiten öffentlichen kryptographischen Schlüssels (122) umfasst.

9. Digitales Zertifikat (100) nach Anspruch 8, wobei einer der beiden Verwendungszwecke (116; 126) eine Signaturerstellung ist, wobei der andere der beiden Verwendungszwecke (116; 126) eine Verschlüsselung ist.

10. Digitales Zertifikat (100) nach einem der Ansprüche 1 bis 2, wobei das digitale Zertifikat (100) den ersten und den zweiten öffentlichen kryptographischen Schlüssel (112; 122) in konkatenierter Form als Kombination (152) umfasst, wobei das digitale Zertifikat (100) ferner einen dritten Identifikator (154) eines dritten Algorithmus (160) umfasst, welcher definiert, wie die Kombination (152) mit den konkatenierten ersten und zweiten öffentlichen kryptographischen Schlüsseln (112; 122) für eine Verwendung aufzuteilen ist.

11. Digitales Zertifikat (100) nach Anspruch 10, wobei das digitale Zertifikat (100) die ersten und zweiten Identifikatoren (114; 124) dem dritten Algorithmus (160) als Parameter zuordnet und/oder
wobei das digitale Zertifikat (100) die ersten und zweiten Verwendungszwecke (116; 126) dem dritten Algorithmus (160) als Parameter zuordnet.

12. Digitales Zertifikat (100) nach einem der vorangehenden Ansprüche, wobei es sich bei dem ersten und dem zweiten kryptographischen Algorithmus jeweils um einen Post-Quanten-Kryptographie-Algorithmus handelt.

13. Elektronisches Speichermedium, auf welchem ein digitales Zertifikat (100) nach einem der vorangehenden Ansprüche gespeichert ist.

14. Verfahren zum Verwenden eines digitalen Zertifikats (100) nach einem der Ansprüche 1 bis 12,
wobei das Verfahren umfasst:
ein Empfangen einer digitalen Signatur (322) des Inhabers des Zertifikats (100),
ein Empfangen des digitalen Zertifikats (100),
ein Validieren der Signatur (108) des Ausstellers des Zertifikats (100),
ein Validieren der empfangenen Signatur (322) des Inhabers des Zertifikats (100) unter Verwendung desjenigen der beiden öffentlichen kryptographischen Schlüssel (112; 122), welcher zur Verwendung in dem Signaturprüfalgorithmus als Signaturprüfschlüssel zum Prüfen von digitalen Signaturen (322) des Inhabers des Zertifikats (100) konfiguriert ist,
auf eine erfolgreiche Validierung der empfangenen Signatur (322) des Inhabers des Zertifikats (100) hin, ein Verschlüsseln von Daten (422) für den Inhaber des Zertifikats (100) unter Verwendung desjenigen der beiden öffentlichen kryptographischen Schlüssel (112; 122), welcher zur Verwendung in dem Verschlüsselungs- oder Schlüsselaushandlungsalgorithmus konfiguriert ist, und
ein Senden der verschlüsselten Daten (422) an den Inhaber des Zertifikats (100).

15. Computersystem (400) umfassend einen Prozessor (408), eine Kommunikationsschnittstelle (410) und einen Speicher (402) mit ausführbaren Programminstruktionen (404), wobei die Kommunikationsschnittstelle (410) konfiguriert ist zur Kommunikation über ein Netzwerk (602), wobei ein Ausführen der Programminstruktionen (404) durch den Prozessor (408) den Prozessor (408) dazu veranlasst das Computersystem (400) zum Ausführen eines Verfahrens zum Verwenden eines digitalen Zertifikats (100) nach einem der Ansprüche 1 bis 12 zu steuern,
wobei das Verfahren durch das Computersystem (400) umfasst:
ein Empfangen einer digitalen Signatur (322) des Inhabers des Zertifikats (100) unter Verwendung der Kommunikationsschnittstelle (410),
ein Empfangen des digitalen Zertifikats (100) unter Verwendung der Kommunikationsschnittstelle (410),
ein Validieren der Signatur (108) des Ausstellers des Zertifikats (100),
ein Validieren der empfangenen Signatur (322) des Inhabers des Zertifikats (100) unter Verwendung desjenigen der beiden öffentlichen kryptographischen Schlüssel (112; 122), welcher zur Verwendung in dem Signaturprüfalgorithmus als Signaturprüfschlüssel zum Prüfen von digitalen Signaturen (322) des Inhabers des Zertifikats (100) konfiguriert ist,
auf eine erfolgreiche Validierung der empfangenen Signatur (322) des Inhabers des Zertifikats (100) hin, ein Verschlüsseln von Daten (422) für den Inhaber des Zertifikats (100) unter Verwendung desjenigen der beiden öffentlichen kryptographischen Schlüssel (112; 122), welcher zur Verwendung in dem Verschlüsselungs- oder Schlüsselaushandlungsalgorithmus konfiguriert ist, und
ein Senden der verschlüsselten Daten (422) an den Inhaber des Zertifikats (100) unter Verwendung der Kommunikationsschnittstelle (410).
